(19) Europäisches Patentamt
European Patent Office
Office européen des brevets

(11) EP 4 367 151 B1

(12) EUROPEAN PATENT SPECIFICATION

(45) Date of publication and mention of the grant of the patent:
**16.07.2025 Bulletin 2025/29**

(21) Application number: **22716230.2**

(22) Date of filing: **18.03.2022**

(51) International Patent Classification (IPC):
***C08F 220/18*** (2006.01) ***C08F 8/30*** (2006.01)
***C09D 133/14*** (2006.01) ***C09D 133/24*** (2006.01)

(52) Cooperative Patent Classification (CPC):
(C-Sets available)
**C09D 133/14; C08F 8/30; C08F 220/1808; C09D 133/24** (Cont.)

(86) International application number:
**PCT/EP2022/057148**

(87) International publication number:
**WO 2023/280449 (12.01.2023 Gazette 2023/02)**

(54) **AQUEOUS VINYL POLYMER DISPERSION**
WÄSSRIGE VINYLPOLYMERDISPERSION
DISPERSION AQUEUSE DE POLYMÈRE VINYLIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.07.2021 EP 21184402**

(43) Date of publication of application:
**15.05.2024 Bulletin 2024/20**

(73) Proprietor: **Allnex Netherlands B.V.**
**4612 RB Bergen op Zoom (NL)**

(72) Inventors:
- **VERHAGEN, Nicole**
  **4581 RR Vogelwaarde (NL)**
- **VAN GORKUM, A.P.M.**
  **4909 AC Oosteind (NL)**
- **MESTACH, Dirk Emiel Paula**
  **2560 Nijlen (BE)**

(74) Representative: **Allnex Netherlands B.V.**
**Patent Department**
**33 Anderlechtstraat**
**1620 Drogenbos (BE)**

(56) References cited:
**CN-B- 107 700 216**
**US-A1- 2014 031 486**
**US-A1- 2017 275 407**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 8/30, C08F 220/1808;**
**C08F 220/1808, C08F 220/14, C08F 212/08, C08F 216/1433, C08F 220/58, C08F 220/06, C08F 212/36, C08F 230/085;**
**C08F 220/1808, C08F 220/14, C08F 212/08, C08F 216/1433, C08F 220/58, C08F 220/36, C08F 220/06, C08F 212/36, C08F 230/085**

## Description

### Field of the Invention

The present invention relates to aqueous vinyl polymer dispersions, to a method for the preparation of said aqueous dispersions and to water borne coating formulations prepared from said dispersions, for application and curing on a broad range of substrates, in particular wooden substrates, the resulting coatings being characterized by a combination of improved chemical, stain and blocking resistance.

### Background Art

Aqueous dispersions of vinyl polymers made by radically initiated emulsion copolymerization of ethylenically unsaturated monomers have been known in the art.

EP 0 758 364 B2 and WO2012/140042A1 disclose acrylic dispersions that combine film hardness with a low minimal film formation temperature (MFFT) by modifying the polymer particle morphology and introducing a self-crosslinking mechanism. The self-crosslinking is based on the reaction of a carbonyl-functional monomer, incorporated into the vinyl polymer back-bone, that can react with a multifunctional amine or hydrazide functional crosslinker after film-formation has taken place. Examples of the carbonyl-functional monomers are acetoacetoxy ethyl (meth)acrylate and diacetone (meth)acrylamide.

US 5,139,882 discloses vinyl polymer dispersions that can be used for the production of coatings with a good alcohol resistance. The co-polymers in these dispersions are synthesized as multiple-phase polymers according to the so-called core-shell sequential polymerization technique. More particularly, in these core-shell dispersions, largely hydrophobic monomers are copolymerized with ethylenically unsaturated carboxylic acidic monomers and ethylenically unsaturated monomers bearing a polar and hydrophilic ureido or imidazole group. They are incorporated in the dispersion vinyl polymer in quantities equal to 0 to 10% by weight, preferably 0.1 to 5% by weight. In US 5,139,882 no copolymerized ethylenically unsaturated monomers having a crosslinkable group, for crosslinking after film-formation, are mentioned.

EP 0 927 198 B1 and EP 1 125 949 B1 disclose vinyl polymer dispersions with carbonyl-functional monomers, carboxylic acid functional monomers and nitrogen bearing monomers, such as an ureido-monomer or tertiary amine functional monomer. The dispersed particles have a gradient morphology, meaning that there is a gradual composition change in the monomers that are dosed into the polymerization reactor. The vinyl polymer dispersions are claimed to have superior properties compared to vinyl polymer dispersions with an homogeneous or core-shell morphology. A small amount of gel can be created in the vinyl polymer particles by copolymerizing a multifunctional monomer. In EP 0 927 198 B1 a conventional surfactant is used; in EP 1 125 949 B1 the surfactant is part of the vinyl polymer backbone, through the use of a copolymerizable surfactant bearing an ethylenically unsaturation.

US 5,468,800, EP 0 722 477 B1 and DE 44 39 457 A1 disclose the use of an ureido-functional monomer in the synthesis of latexes which lead to films which are crosslinked at room temperature by addition of a polyaldehyde or a polyacetal. Alternatively copolymerizable aldehydes or masked aldehydes can be used as well. The copolymerizable aldehydes are combined with the ureido monomer in the course of the synthesis of the latex and not in the form of a mixture of two latexes.

US 6,605,359 B2 discloses a coating compositions that includes a vinyl polymer, a hydrazide and a silane. The vinyl polymer has at least one reactive functional group which can be carboxyl, hydroxyl, epoxy, amino, ketone, silane, silanol, and alkylamino functional groups. In a specific embodiment the vinyl polymer is used under the form of an aqueous dispersion or "latex". US 6,605,359 B2 is silent about the morphology of the vinyl polymer particles in the latex.

US 6,107,391 discloses a one-component system based on co-reactive latexes which is able to lead to coatings which are crosslinkable at room temperature and post-crosslinkable by heat treatment, the said system consisting of a mixture of two particle dispersions, (A) and (B), each obtained by aqueous emulsion copolymerization of a monomer composition A and a monomer composition B, respectively, wherein

(a) at least one free-radically polymerizable ethylenically unsaturated monomer comprising a $R_1R_2N\text{-}CO\text{-}NHR_3$ functional group, with $R_1$ containing an ethylenically unsaturated group, $R_2$ and $R_3$ being hydrogen or a $C_1$ to $C_{18}$ alkyl group and $R_2$ - $R_3$ optionally being $-CH_2\text{-}CH_2-$ forming a five-membered ring, enters into the monomer composition A; and

(b) at least one free-radically polymerizable ethylenically unsaturated monomer comprising a masked aldehyde functional group enters into the monomer composition B.

CA 2,203,438 A1 discloses an aqueous polymer dispersion containing:

A) a dispersed polymer A which is obtained by a free-radical aqueous emulsion polymerization in two chronologically

successive steps of different monomer compositions and comprises ureido groups; and
B) a polyaldehyde compound.

Dispersed polymer A is obtained from polymerizing a monomer composition 1 to a conversion of at least 90% by weight, based on the monomer composition 1, before polymerizing monomer composition 2 in the presence of the product mixture comprising the polymerized composition 1. Both composition 1 and 2 comprise adhesion-promoting monomers having at least one ethylenically unsaturated monomer comprising a $-R_1N-CO-NHR_2$ functional group, with $R_1$ and $R_2$ being both hydrogen or a $C_1$ to $C_5$-alkyl or both together form a bridging $C_2$-$C_4$-alkylene group which may be mono-substituted or disubstituted by $C_1$-$C_4$-alkoxy and/or hydroxyl.
Without questioning the positive properties of water based coating systems comprising the prior art aqueous vinyl polymer dispersions, there is still a need for improvement when dealing with stain and chemical resistance of the current state of the art coating systems.
CN107700216A discloses a preparation method of nano-modified fluorine-containing textile finishing agents, where inorganic nano-materials are introduced into organic high-polymer systems such as fluorinated polyacrylates. Although in this document, the organic fluorine content is reduced compared to existing methods known in the art, while maintaining the water and oil repellency of textile requirements, the prepared textile finishing agents still contain a considerable amount of fluorine. As fluorinated compounds are not desirable due to their environmental impact (fluorinated compounds being not degradable), it is desirable to seek for non-fluorine containing water based coating systems.
US2014/031486 discloses waterborne coatings having improved performance properties comprising a crosslinkable binder resin which is the polymerized reaction product of a mixture of monomers comprising: (i) about 1 to about 25% by weight of a monomer having pendent carbonyl latent crosslinking functionality; (ii) about 0.5 to about 15% by weight of an acid functional monomer; and (iii) about 60 to about 98.5% of at least one other copolymerizable monomer; and (b) a crosslinker for the binder resin selected from the group consisting of di and poly amines, di and poly hydrazides, and di and poly hydrazines.
US2017/275407 discloses a polymer dispersion comprising a crosslinking agent such as a polyhydrazide or a polyamine and a multistage polymer comprising a polymerized emulsifier.

Aim of the Invention

The present invention aims to provide an aqueous dispersion for coating compositions that do not present the drawbacks of the prior art.
It is the aim of the present invention to provide aqueous vinyl polymer dispersions with improved stain, chemical and blocking resistance compared to the current state in the art coating systems.

Summary of the invention.

The present invention discloses an aqueous vinyl polymer dispersion comprising:

- the reaction product of free radical emulsion polymerized alpha, beta-ethylenically unsaturated monomers (A) of a monomer mixture (A1) and a monomer mixture (A2), and
- one or more crosslinker(s) (B),

said alpha, beta-ethylenically unsaturated monomers (A) comprising:

- one or more alpha, beta-ethylenically unsaturated monomer(s) (i) having a crosslinkable group;
- one or more alpha, beta-ethylenically unsaturated monomer(s) (ii) having a silane group;
- one or more polyfunctional alpha, beta-ethylenically unsaturated monomer(s) (iii);
- one or more copolymerizable surfactant(s) (iv); and
- further non-ionic alpha, beta-ethylenically unsaturated monomers being different from monomers (i) to (iv).

The aqueous vinyl polymer dispersion comprises 0.0 % fluorine.
Preferred embodiments of the present invention disclose one or more of the following features:

- the alpha, beta-ethylenically unsaturated monomers (A) of a monomer mixture (A1) and a monomer mixture (A2) additionally comprise:

    - one or more acid functional alpha, beta-ethylenically unsaturated monomer(s) (v);

- one or more adhesion promoting alpha, beta-ethylenically unsaturated nitrogen containing monomer(s) (vi);

- the alpha, beta-ethylenically unsaturated monomers (A) of a monomer mixture (A1) and a monomer mixture (A2) comprise:

  - from 1.0 to 10.0 % by weight of one or more alpha, beta-ethylenically unsaturated monomer(s) (i) having a crosslinkable group;
  - from 0.5 to 5.0 % by weight of one or more alpha, beta-ethylenically unsaturated monomer(s) (ii) having a silane group;
  - from 0.5 to 3.0 % by weight of one or more polyfunctional alpha, beta-ethylenically unsaturated monomer(s) (iii); and
  - from 0.5 to 5.0 % by weight of one or more copolymerizable surfactant(s) (iv);
  - from 0.1 to 10.0 % by weight of one or more acid functional alpha, beta-ethylenically unsaturated monomer(s) (v);
  - from 0.1 to 5 % by weight of one or more adhesion promoting alpha, beta-ethylenically unsaturated nitrogen containing monomer(s) (vi);

  on the total of alpha, beta-ethylenically unsaturated monomers,
  the remainder, up to 100% by weight, being non-ionic alpha, beta-ethylenically unsaturated monomers being different from monomers (i) to (iv) and (vi);

- the alpha, beta-ethylenically unsaturated monomers are obtained from renewable feedstock;

- the non-ionic alpha, beta-ethylenically unsaturated monomers are obtained from renewable feedstock or are recycled monomers, preferably, the non-ionic alpha, beta-ethylenically unsaturated monomers are obtained from renewable feedstock and have a bio-based carbon content of more than 20% by weight of total carbon content of the monomer, the bio-carbon content being determined using the ASTM D6866-20 standard;

- the monomer composition of monomer mixture (A1) is different from the monomer composition of monomer mixture (A2);

- the difference in glass transition temperature between the copolymer of the emulsion polymerized monomers of mixture (A1) and the copolymer of the emulsion polymerized monomers of mixture (A2) is at least 20 °C;

- the glass transition temperature of one of the copolymers, obtained from emulsion polymerized monomers of monomer mixture (A1) or from emulsion polymerized monomers mixture (A2) is at least 25 °C, the glass transition temperature of the other copolymer, being lower;

- the weight ratio of the polymerized alpha, beta-ethylenically unsaturated monomers (A) over the one or more crosslinker(s) (B) is comprised between 10 and 500.

- the one or more crosslinker(s) (B) is (are) adipic acid dihydrazide;

The present invention further discloses a method for the preparation of the aqueous dispersion comprising the steps of:

- preparing monomer mixture or monomer pre-emulsion (A1) in feed vessel (FA1) and monomer mixture or monomer pre-emulsion (A2) in feed vessel (FA2), and

- feeding monomer mixture (A1), from a feed vessel (FA1), into a polymerization reactor while feeding, simultaneously or after a delay, monomer mixture (A2) from feed vessel (FA2) into the feed vessel (FA1) while copolymerizing the monomers in the polymerization reactor, or

- feeding monomer mixture (A2), from a feed vessel (FA2), into a polymerization reactor while feeding, simultaneously or after a delay, monomer mixture (A1) from feed vessel (FA1) into the feed vessel (FA2) while copolymerizing the monomers in the polymerization reactor.

The present invention further discloses an aqueous dispersion, prepared according to said method, comprising dispersed particles with gradual composition wherein:

- the difference between the glass transition temperature of the polymerized alpha, beta-ethylenically unsaturated monomers at the beginning of the monomer feed into the polymerization reactor and the glass transition temperature of the polymerized alpha, beta-ethylenically unsaturated monomers at the end of the monomer feed into the polymerization reactor is at least 20 °C;
- the dispersed particles comprise polymerized alpha, beta-ethylenically unsaturated monomers having a glass transition temperature of at least 25°C;
- the transition of the glass transition temperatures from the copolymers being continuously gradual.

The present invention further discloses a coating composition comprising the aqueous dispersion and a method for producing a coated substrate comprising said coating composition.
The present invention further discloses a substrate selected from the group consisting of solid wood, engineered wood, metal, polymers, glass, composites, concrete, and ceramics, preferably a wooden substrate, coated with the composition of the invention.

Detailed Description of the Invention.

It has been found that coating compositions comprising an aqueous dispersion, said dispersion comprising the reaction product of free radical emulsion polymerized alpha, beta-ethylenically unsaturated monomers (A) of a monomer mixture (A1) and a monomer mixture (A2) in combination with one or more crosslinker(s) (B), provide coatings with improved stain resistance, chemical resistance and blocking resistance compared to coating compositions described in the art.
The aqueous vinyl polymer dispersion of the present invention does not contain fluorine, i.e. the aqueous vinyl polymer dispersion of the present invention comprises 0.0 % fluorine.
In the context of the present description, "a non-fluorine containing aqueous vinyl polymer dispersion" refers to an aqueous vinyl polymer dispersion comprising 0.0 % fluorine.
The alpha, beta-ethylenically unsaturated monomers (A) of monomer mixture (A1) and of monomer mixture (A2) of the present invention comprise:

- one or more alpha, beta-ethylenically unsaturated monomer(s) (i) having a crosslinkable group;
- one or more alpha, beta-ethylenically unsaturated monomer(s) (ii) having a silane group;
- one or more polyfunctional alpha, beta-ethylenically unsaturated monomer(s) (iii);
- one or more copolymerizable surfactant(s) (iv); and
- further alpha, beta-ethylenically unsaturated non-ionic monomers being different from monomers (i) to (iv).

Preferably, the aqueous vinyl polymer dispersion of the present invention comprises the reaction product of free radical emulsion polymerized alpha, beta-ethylenically unsaturated monomers (A) of monomer mixture (A1) and of monomer mixture (A2), comprising:

- from 1.0 to 10.0 % by weight, preferably from 1.5 to 9 % by weight, more preferably from 2 to 7% by weight, of one or more alpha, beta-ethylenically unsaturated monomer(s) (i) having a crosslinkable group;
- from 0.5 to 5.0 % by weight, preferably from 0.7 to 4% by weight, more preferably from 0.9 to 2% by weight, of one or more alpha, beta-ethylenically unsaturated monomer(s) (ii) having a silane group;
- from 0.5 to 3.0 % by weight, preferably from 0.7 to 2.5 % by weight, more preferably from 0.9 to 2% by weight, of one or more polyfunctional alpha, beta-ethylenically unsaturated monomer(s) (iii); and
- from 0.1 to 5.0 % by weight, preferably from 0.2 to 3.0 % by weight, more preferably from 0.5 to 2% by weight of one or more copolymerizable surfactant(s) (iv);

on the total of alpha, beta-ethylenically unsaturated monomers,
the remainder, up to 100% by weight, being non-ionic alpha, beta-ethylenically unsaturated monomers being different from monomers (i) to (iv).

More preferably the alpha, beta-ethylenically unsaturated monomers (A) of monomer mixture (A1) and of monomer mixture (A2) additionally comprise:

- one or more acid functional alpha, beta-ethylenically unsaturated monomer(s) (v);
- one or more adhesion promoting alpha, beta-ethylenically unsaturated nitrogen containing monomer(s) (vi).

Even more preferably the aqueous vinyl polymer dispersion of the present invention comprises the reaction

product of free radical emulsion polymerized alpha, beta-ethylenically unsaturated monomers (A) of monomer mixture (A1) and of monomer mixture (A2), comprising:

- from 1.0 to 10.0 % by weight, preferably from 1.5 to 9 % by weight, more preferably from 2 to 7% by weight, of one or more alpha, beta-ethylenically unsaturated monomer(s) (i) having a crosslinkable group;
- from 0.5 to 5.0 % by weight, preferably from 0.7 to 4% by weight, more preferably from 0.9 to 2% by weight, of one or more alpha, beta-ethylenically unsaturated monomer(s) (ii) having a silane group;
- from 0.5 to 3.0 % by weight, preferably from 0.7 to 2.5 % by weight, more preferably from 0.9 to 2% by weight, of one or more polyfunctional alpha, beta-ethylenically unsaturated monomer(s) (iii); and
- from 0.1 to 5.0 % by weight, preferably from 0.2 to 4.0 % by weight, more preferably from 0.5 to 3% by weight, of one or more copolymerizable surfactant(s) (iv);
- from 0.1 to 10.0 % by weight, preferably from 0.5 to 7 % by weight, more preferably from 1 to 5% by weight, of one or more acid functional alpha, beta-ethylenically unsaturated monomer(s) (v);
- from 0.1 to 5 % by weight, preferably from 0.2 to 4.0 % by weight, more preferably from 0.5 to 3.0 % by weight, of one or more adhesion promoting alpha, beta-ethylenically unsaturated nitrogen containing monomer(s) (vi);

on the total of alpha, beta-ethylenically unsaturated monomers,
the remainder, up to 100% by weight, being non-ionic alpha, beta-ethylenically unsaturated monomers different from (i) to (iv) and (vi).

In the present invention,

- either both of the monomer mixtures (A1) and (A2) comprise all of the alpha, beta-ethylenically unsaturated monomers (i) to (iv), preferably (i) to (vi); or

- monomer mixture (A1) comprises at least one of the alpha, beta-ethylenically unsaturated monomers (i) to (iv), preferably (i) to (vi), the remainder of said ethylenically unsaturated monomers (i) to (iv), preferably (i) to (vi), being present in monomer mixture (A2); or

- monomer mixture (A1) and monomer mixture (A2) each comprise part of the alpha, beta-ethylenically unsaturated monomers (i) to (iv), preferably (i) to (vi), with some of the ethylenically unsaturated monomers (i) to (iv), preferably (i) to (vi), being present in both monomer mixtures (A1) and (A2);

with the proviso that all of the alpha, beta-ethylenically unsaturated monomers (i) to (iv), preferably (i) to (vi), are present in the alpha, beta-ethylenically unsaturated monomers (A), and with the proviso that the same or different non-ionic alpha, beta-ethylenically unsaturated monomers are present in both monomer mixtures (A1) and (A2).

The alpha, beta-ethylenically unsaturated monomer composition of both monomer mixture (A1) and monomer mixture (A2) is preferably selected in such a way that:

- the monomer composition of monomer mixture (A1) is different from the monomer composition of monomer mixture (A2);

- the difference in glass transition temperature between the copolymer of the emulsion polymerized monomers of mixture (A1) and the copolymer of the emulsion polymerized monomers of mixture (A2) is at least 20 °C (the glass transition temperature being calculated using the well-known Fox equation);

- the glass transition temperature of one of the copolymers, obtained from emulsion polymerized monomers of monomer mixture (A1) or from emulsion polymerized monomers mixture (A2) is at least 25 °C, the glass transition temperature of the other copolymer, being lower (the glass transition temperature being calculated using the well-known Fox equation).

More particularly, the alpha, beta-ethylenically unsaturated monomer composition of both monomer mixture (A1) and monomer mixture (A2) is preferably selected in such a way that:

- the difference in (estimated) glass transition temperature Tg (resulting from the Fox equation (vide infra)) between

    the copolymer of the emulsion polymerized monomers (i), (v) where present, and further non-ionic alpha, beta-ethylenically unsaturated monomers, of monomer mixture (A1) and

the copolymer of the emulsion polymerized monomers (i), (v) where present, and further alpha, beta-ethylenically unsaturated monomers, of monomer mixture (A2) is at least 20 °C, preferably at least 25 °C, more preferably at least 30°C, most preferably at least 35°C; and

- the (estimated) glass transition temperature Tg (resulting from the Fox equation) of one of the copolymers, said copolymer being obtained from:

  - either emulsion polymerized monomers (i), (v) where present, and further non-ionic alpha, beta-ethylenically unsaturated monomers, of monomer mixture (A1),
  - or emulsion polymerized monomers (i), (v) where present, and further non-ionic alpha, beta-ethylenically unsaturated monomers, of monomer mixture (A2),

  is at least 25 °C, preferably at least 30 °C, more preferably at least 35 °C,
  the (estimated) glass transition temperature Tg (resulting from the Fox equation) of the other copolymer being lower.

In the present invention, (estimated) values of glass transition temperature Tg of the respective copolymers are calculated using the Fox equation (T. G. Fox, Bull. Am. Phys. Soc. 1, 123 (1956)), which is well known in the art, and which is represented by the formula:

$$1/Tg = W(1)/Tg(1) + W(2)/Tg(2) + W(3)/Tg(3) + \ldots..$$

wherein W(1), W(2), W(3), (etcetera), are the weight fractions of the monomers (1), (2), and (3) composing the copolymer, (etcetera), and Tg(1), Tg(2), Tg(3) are the glass transition temperatures of the respective homopolymers of monomer (1), monomer (2), monomer (3). Glass transition values for homopolymers given in the Polymer Handbook, 4th edition (editors: J. Brandrup, E.H. Immergut, E.A. Grulke, John Wiley & Sons, Inc. 1999) are used to perform the calculation. The calculated Tg in degrees Kelvin may be readily converted to degrees Celsius.

The non-ionic alpha, beta-ethylenically unsaturated monomers preferably are selected from the group consisting of vinyl aromatic monomers, alkylesters of (meth)acrylic acid, dialkyl esters of ethylenically unsaturated diacids, vinyl alkanoates, monomers based on the formal or ketal of glycerol, (meth)acrylonitrile, and mixtures thereof.

In the context of the present description, the glass transition temperature Tg is thus referring to the calculated (or estimated) glass transition temperature, as calculated using the well-known (or conventional used) Fox equation.

More preferably the non-ionic alpha, beta-ethylenically unsaturated monomers are selected from the group consisting of vinyl aromatic monomers, alkylesters of (meth)acrylic acid, and dialkyl esters of ethylenically unsaturated diacids, and mixtures thereof.

The non-ionic alpha, beta-ethylenically unsaturated monomers are obtained from petrochemical feedstock.

Alternatively and preferred, where possible, the non-ionic alpha, beta-ethylenically unsaturated monomers are obtained from renewable feedstock (i.e. the monomers, such as for example n-heptyl acrylate, isobornyl methacrylate, and/or isobutyl acrylate, are obtained in part or fully from (bio-)renewable sources). The exact amounts of bio-based carbon in these monomers can be determined by the method described in ASTM D6866-20, wherein carbons resulting from contemporary biomass-based inputs are distinguished from those derived from fossil-based inputs, the bio-based carbon content being reported as the fraction of total organic carbon content (TOC). Other standardized methods to determine the fraction of renewable carbon are ISO 16620-2 and CEN 16640.

Another alternative method for reducing the carbon footprint of the polymer dispersions of the invention is to use recycled monomers for the preparation thereof. Polymers, such as poly(methyl methacrylate) or poly(styrene), can be pyrolyzed at temperatures above their ceiling temperature. By distillation of the pyrolysis products, recycled monomers, such as methyl methacrylate or styrene, can be obtained which can then be further used in the emulsion polymerization for preparing the polymer dispersion of the present invention.

In yet another alternative, the non-ionic alpha, beta-ethylenically unsaturated monomers are obtained from petrochemical feedstock and/or renewable feedstock, and/or are recycled monomers.

In the context of the present description, "bio-based carbon content" refers to bio-carbon content.

Typical vinyl aromatic monomers include styrene; alpha-methyl styrene; isopropyl styrene; ortho-methyl-para-isopropyl styrene; para-tertiary-butyl styrene; vinyl toluene; ortho-, meta-, and para-methyl styrene; ortho, para-dimethyl styrene; ortho-, meta-, and para-ethyl styrene; ortho, para-diethyl styrene; para-chlorostyrene; and ortho, para-dichlorostyrene.

Typical alkylesters of (meth)acrylic acid include methyl (meth) acrylate, ethyl (meth) acrylate, n-butyl (meth) acrylate, isobutyl (meth)acrylate, tertiary butyl (meth)acrylate, 2-ethylhexyl (meth) acrylate, n-heptyl (meth)acrylate, n-octyl (meth)acrylate, iso-octyl (meth)acrylate, nonyl (meth)acrylate, isodecyl (meth)acrylate, lauryl(meth)acrylate, stearyl

(meth)acrylate, cyclohexyl (meth) acrylate, and isobornyl(meth)acrylate.

Typical dialkyl esters of ethylenically unsaturated diacids include dimethyl maleate, dibutyl maleate, diisooctyl maleate, dilauryl maleate, diethyl fumarate, dimethyl fumarate, diethyl fumarate, diisopropyl fumarate, di-isobutyl fumarate, di-(n-pentyl) fumarate, dihexyl fumarate, di(2-ethylhexyl) fumarate, dodecyl fumarate, dimethyl itaconate, diethyl itaconate, dipropyl itaconate, dibutyl itaconate, dibutyl mesaconate, and dibutyl citraconate.

Typical vinyl alkanoates include vinyl acetate, vinyl propionate, vinyl butyrate, vinyl 2-ethylhexoate and vinyl neodecanoate (trade name VEOVA® 10 available from Hexion)

Typical monomers based on the formal or ketal of glycerol are glycerol formal methacrylate and isopropylideneglycerol methacrylate.

The one or more alpha, beta-ethylenically unsaturated monomer(s) (i) having a crosslinkable group preferably are selected from the group consisting of hydroxyl functional monomers, carbonyl group comprising monomers, and unsaturated fatty acid comprising monomers, and mixtures thereof.

Typical hydroxyl functional monomers (i) include 2-hydroxyethyl (meth)acrylate, 2-hydroxypropyl (meth)acrylate, 2,3-dihydroxypropyl (meth)acrylate, 2-, 3-, 4-hydroxybutyl (meth)acrylate, N-methylol (meth)acrylamide, 1,2-propanediol 1-isocrotonate, 2-allyloxyethanol, and also monomers having latent hydroxy groups such as glycidyl methacrylate. The hydroxyl-functional groups can be cross-linked with polyisocyanates (B) at ambient to slightly elevated temperature. Alternative crosslinkers (B) include blocked polyisocyanates, urea and melamine formaldehyde resins.

Typical carbonyl group comprising monomers (i) include acrolein, methacrolein, crotonaldehyde, 4-vinylbenzaldehyde, vinyl C1-C4 alkyl ketones, acrylamido pivalaldehyde, methacrylamido pivalaldehyde, 3-acrylamidomethylanisaldehyde, diacetone (meth)acrylate, the adduct of levulinic acid and glycidyl (meth)acrylate, keto-containing amides such as diacetone acrylamide and acetoacetoxy functional groups comprising monomers including acetoacetoxyethyl (meth)acrylate, acetoacetoxypropyl (meth)acrylate, acetoacetoxybutyl acrylate and allyl acetoacetate. Crosslinkers (B) for use in combination with the foregoing functional groups comprise di- or polyamines, carbohydrazide, and di- or polycarboxylic acid hydrazides or mixtures thereof. Crosslinking can occur at ambient or slightly elevated temperature.

Typical unsaturated fatty acid comprising monomers include oleyl (meth)acrylate, linoleyl (meth)acrylate, linolenyl(meth)acrylate, and vinyloxazoline diesters of unsaturated fatty. These monomers provide auto-oxidative drying properties when used in combination with metal driers such as metal carboxylates, where the metal is selected from the group consisting of cobalt, lead, iron, manganese, vanadium, calcium, strontium, zirconium, zinc, lithium and barium.

Preferably the alpha, beta-ethylenically unsaturated monomer (i) having a crosslinkable group is acetoacetoxyethyl methacrylate or diacetone acrylamide, or mixtures thereof, preferably in combination with adipic acid dihydrazide as crosslinker (B). The crosslinker(B) may be added to the vinyl polymer dispersions during or after the synthesis, or can be added at a later stage, for example during the formulation of the coating.

More preferably, the crosslinkable group of the one or more alpha, beta-ethylenically unsaturated monomer(s) (i) is a pendant group comprising moieties selected from the group consisting of -CO-R', $-CO-CH_2-CO-CH_3$, and $-CH_2OH$ , wherein R' is H or C(1-4) alkyl.

Preferably the one or more alpha, beta-ethylenically unsaturated monomer(s) (ii) having a (organo-functional) silane group is a (are) vinyl or (meth)acrylate monomer(s) having a silane group of the formula $-(CH_2)_n-Si(OR)_3$ (more particularly of the formula $-(CH_2)_n-Si(-O-R)_3$) wherein R is an alkyl group with up to 4 carbons and n is an integer from 0 to 3.

Typical silane groups include gamma-propyltrimethoxysilane, gamma-propyltriethoxysilane, and gamma-propyltriisopropoxysilane.

Preferably the alpha, beta-ethylenically unsaturated monomer(s) (ii) having a silane group is gamma-methacryloxypropyl trimethoxysilane.

Preferably, the one or more polyfunctional alpha, beta-ethylenically unsaturated monomer(s) (iii) comprise(s) monomers having two or more (meth)acrylic groups and/or allyl groups and/or vinyl groups.

The one or more polyfunctional alpha, beta-ethylenically unsaturated monomer(s) (iii) more preferably are selected from the group consisting of triallyl cyanurate, divinyl benzene, trivinyl benzene, vinyl (meth)acrylate, allyl (meth) acrylate, diol di(meth)acrylates, triol tri(meth)acrylates and methylene bis(meth)acrylamide.

Typical allyl (meth)acrylates (iii) include trimethylolpropane di(meth)acrylate monoallyl ether, trimethylolpropane(meth)acrylate diallyl ether, pentaerythritol tri(meth)acrylate monoallyl ether, pentaerythritol di(meth)acrylate diallyl ether and pentaerythritol(meth)acrylate triallyl ether.

Typical diol di(meth)acrylates (iii) include ethylene glycol di(meth)acrylate, 1,2-propylene glycol di(meth)acrylate, 1,3-propylene glycol di(meth)acrylate, butane-1,4-diol di(meth)acrylate, neopentyl glycol di(meth)acrylate, 3-methylpentanediol di(meth)acrylate, diethylene glycol di(meth)acrylate, triethylene glycol di(meth)acrylate, tetraethylene glycol di(meth)acrylate, dipropylene glycol di(meth)acrylate, tripropylene glycol di(meth)acrylate and hexanediol di(meth) acrylate.

Typical triol tri(meth)acrylates (iii) include trimethylolpropane tri(meth) acrylate and glyceryl tri(meth)acrylate.

Preferably the polyfunctional alpha, beta-ethylenically unsaturated monomer (iii) is divinylbenzene.

The one or more copolymerizable surfactant(s) (iv) preferably is (are) anionic copolymerizable surfactant(s).

Typical examples of both anionic and non-ionic copolymerizable surfactants (iv) are commercially available under the brand names BISOMER® MPEG 350 MA from Laporte; HITENOL® BC - 20, HITENOL® BC - 2020, HITENOL® KH - 10 or NOIGEN® RN - 50 (APEO) from Dai - Ichi Kogyo Seiyaku Co. Ltd .; MAXEMUL® 6106, MAXEMUL® 6112, MAXEMUL® 5010, MAXEMUL® 5011 from Croda; SIPOMER® PAM 100, SIPOMER® PAM 200, SIPOMER® PAM 300, SIPOMER® PAM 600, SIPOMER® PAM 4000, SIPOMER® PAM 5000 from Solvay; ADEKA REASOAP® PP - 70, ADEKA REASOAP® NE - 10, ADEKA REASOAP® NE - 20, ADEKA REASOAP® NE - 30, ADEKA REASOAP® NE - 40, ADEKA REASOAP® SE - 10N , ADEKA REASOAP® SE - 1025A, ADEKA REASOAP® SR - 10, ADEKA REASOAP® SR - 1025, ADEKA REASOAP® SR - 20, ADEKA REASOAP® ER - 10, ADEKA REASOAP® ER - 20, ADEKA REASOAP® ER - 30, ADEKA REASOAP® ER - 40 from Adeka; PLURIOL® A 010 R, PLURIOL® A12 R, PLURIOL® A 23 R, PLURIOL® A 46 R, PLURIOL® A 750 R, PLURIOL® A 950 R, PLURIOL® A 590 I, PLURIOL® A1190 I, PLURIOL® A 590 V, PLURIOL® A 1190 V, PLURIOL® A 5890 V, PLURIOL® A 308 R and DAA ES 8761 from BASF SE; LATEMUL® S 180 A and LATEMUL® S 180 from Kao; ELEMINOL® JS - 2 from Sanyou Kasei; AQUARON® HS - 1025 from Daiichi Kogyou Seiyaku.

A preferred copolymerizable surfactant has the following structure:

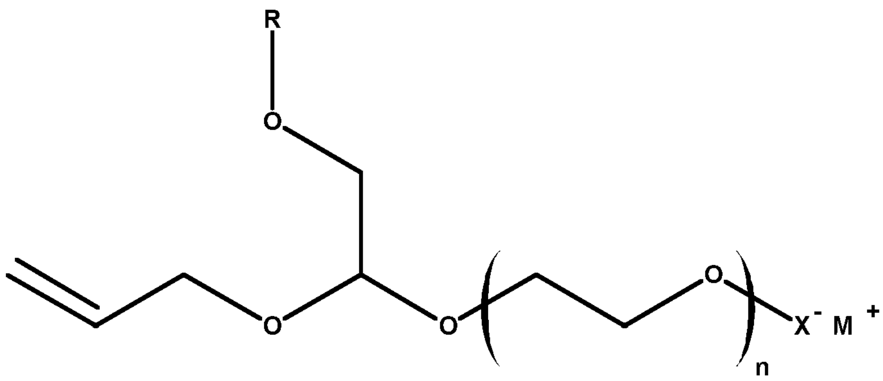

wherein R is a C6 to C22 alkyl group, n is from 1 to 30, $X^-$ is $SO_3^-$ and $M^+$ is $Na^+$, $K^+$, $Li^+$, $NH_4^+$ or a protonated or quaternary amine.

Optionally the copolymerizable surfactant (iv) is mixed with at most 50% by weight, preferably with at most 25% by weight, more preferably with at most 10% by weight, of conventional non-polymerizable anionic and/or non-ionic surfactants, based on the total of surfactants.

Examples of non-polymerizable anionic surfactants are potassium laurate, potassium stearate, potassium oleate, sodium decyl sulfate, sodium dodecyl sulfate, and sodium rosinate. Examples of non-polymerizable non-ionic surfactants are linear and branched alkyl polyethylene glycol ethers, and thioethers, and the adduct of 1 mole of tridecylalcohol with 5 to 50 moles of ethylene oxide.

Preferably the (co)polymerizable surfactant (iv) is used at 100% by weight of the total of surfactants, the joint use of additional conventional non-polymerizable surfactant being omitted (i.e. preferably, the (co)polymerizable surfactant (iv) comprises 0% by weight of additional conventional non-polymerizable surfactant).

The one or more acid functional alpha, beta-ethylenically unsaturated monomer(s) (v) comprise an acid functional group selected from the group consisting of carboxylic acid, phosphoric acid, phosphonic acid, phosphinic acid, sulfuric acid, sulfonic acid and sulfinic acids.

Typical non-carboxylic acid group containing alpha, beta-ethylenically unsaturated monomer(s) (v) include 2-acrylamido-2-methylpropane sulfonic acid, the adduct of allylglycidyl ether to bisulfite, 2-sulfoethyl methacrylate, 1-(allyloxy)-2-hydroxypropane-1-sulfonic acid, monoacryloxyethyl phosphate, 10-methacryloyloxy decyl dihydrogen phosphate, dimethyl (2-methacryloyloxyethyl) phosphonate, dimethyl (2-methacryloyl oxypropyl) phosphonate, and ethyl 2-[4-(dihydroxy phosphoryl)-2-oxabutyl] acrylate.

Preferably the acid functional alpha, beta-ethylenically unsaturated monomer(s) (v) comprise(s) one or more carboxylic acid group(s) or a precursor thereof, such as an anhydride.

Preferably the acid functional alpha, beta-ethylenically unsaturated monomer(s) (v) is (are) selected from the group consisting of (meth)acrylic acid, 2-butenoic acid, 3-pentenoic acid, maleic acid anhydride, maleic acid or its half-esters, fumaric acid or its half-esters, itaconic acid or its half-esters, mesaconic acid or its half-esters, citraconic acid or its half-esters, and mixtures thereof.

Preferably the acid groups are totally or partially converted in the corresponding alkali metal salts, ammonium salts, or amine salts.

The one or more adhesion promoting alpha, beta-ethylenically unsaturated nitrogen containing monomer(s) (vi) comprise(s) amino, ureido, or N-heterocyclic groups, and are preferably selected from the group consisting of dimethylaminoethyl (meth)acrylate, diethylaminoethyl (meth)acrylate, dimethylaminopropyl (meth)acrylate, 3-dimethylamino-2,2-dimethylpropyl-1 (meth)acrylate, 2-N-morpholinoethyl (meth)acrylate, 2-N-piperidinoethyl (meth)acrylate, N-n-octyl acrylamide, N-t-butyl acrylamide, N-(3-dimethylaminopropyl) (meth)acrylamide, N-(3-dimethylamino-2,2-dimethylpropyl) (meth)acrylamide, N-dimethylaminomethyl (meth)acrylamide, N-dimethylaminoethyl (meth)acrylamide, N-(4-morpholinomethyl) (meth)acrylamide, N,N-dimethyl (meth)acrylamide, N,N-diethyl (meth)acrylamide, N-vinyl pyrrolidone, N-acryloxyethyl pyrrolidone, N-vinyl caprolactam, N-(2-methacryloyloxyethyl)ethylene urea, N-(2-acryloyloxyethyl) ethyleneurea, N-(methacrylamidomethylene) ethylene urea, N-(acrylamidomethylene) ethyleneurea, N-(β-methacrylamidoethyl) ethylene urea, N-(β-acrylamidoethyl) ethyleneurea, N-vinyl ethyleneurea, N-vinyloxyethyl ethyleneurea, N-[β-(methacryloyloxyacetamido)ethyl]-N, N'-ethyleneurea, N-[β-(acryloyloxyacetamido)ethyl]ethyleneurea, 1-[2-[[2-hydroxy-3-(2-propenyloxy)propyl] amino]ethyl]-2-imidazolidone, N-methacrylamidomethylurea, N-methacryloylurea, N-(3-[1,3-diazacyclohexane-2-one]propyl)methacrylamide, N-hydroxyethylethyleneurea, N-aminoethylethyleneurea, N-(3-allyloxy-2-hydroxypropyl)aminoethyl ethyleneurea, N-methacrylaminoethyl ethyleneurea, N-acrylaminoethyl ethyleneurea, N-methacryloxyacetoxyethyl ethyleneurea, N-methacryloxyacetaminoethyl ethyleneurea, N-di(3-allyloxy-2-hydroxypropyl) aminoethyl ethyleneurea, N-(2-acryloyloxyethyl) ethyleneurea, N-methacrylamidom ethylurea, 2-propenoic acid, 2-methyl-2-(2-oxo-1-pyrrolidinyl)ethyl ester, or allylalkyl ethyleneurea. A particularly preferred monomer (vi) is N-(2-methacryloyloxyethyl)ethylene urea.

The alpha, beta-ethylenically unsaturated monomers (i) to (vi) are obtained from petrochemical feedstock; alternatively and preferred, where possible, the alpha, beta-ethylenically unsaturated monomers (i) to (vi) are obtained from renewable feedstock (i.e. the monomers, such as for example monomers (v) like itaconic acid and/or (meth)acrylic acid, are obtained in part or fully from (bio-)renewable sources)). The exact amounts of bio-based carbon in these monomers can be determined by the method described in ASTM D6866-20 (as described earlier). Alternatively, recycled monomers, such as recycled methyl methacrylate or recycled styrene, can be used. In yet another alternative, the alpha, beta-ethylenically unsaturated monomers (i) to (vi) are obtained from petrochemical feedstock and/or renewable feedstock, and/or are recycled monomers.

Preferably, the non-ionic alpha, beta-ethylenically unsaturated monomers are obtained from renewable feedstock, or are recycled monomers (such as recycled methyl methacrylate or recycled styrene).

More preferably, the non-ionic alpha, beta-ethylenically unsaturated monomers are obtained from renewable feedstock and have a bio-based carbon content of more than 20% by weight of total carbon content of the monomer, the bio-carbon content being determined using the ASTM D6866-20 standard.

The monomers (A) can be fed to the polymerization reactor as a monomer mixture or as a monomer pre-emulsion. A monomer pre-emulsion consists of monomers (A), part of the copolymerizable surfactant (iv) and/or part of the conventional surfactant used together with an amount of demineralized water. The monomer pre-emulsion is obtained by vigorously stirring the mixture until a stable emulsion is obtained, Preferably a monomer pre-emulsion is used.

Crosslinkers (B) useable in the aqueous dispersion of the present invention preferably have at least two reactive moieties selected from the group consisting of carboxylic acid, amino, thiol, methylol, etherified methylol, isocyanate, aldehyde, and hydrazide.

Crosslinkers (B) used in the aqueous dispersion of the present invention preferably are hydrazide group comprising compounds prepared from aliphatic organic acids, such as adipic acid, oxalic acid, sebacic acid, maleic acid, fumaric acid and/or itaconic acid, isophthalic acid, or hydrazine, although other methods can be used. Another useful hydrazide group comprising compound is carbohydrazide as crosslinker (B).

A preferred hydrazide group comprising compound (B) is adipic dihydrazide.

Typically, the hydrazide group comprising compound (B) is mixed into a dispersion containing the vinyl polymer. If desired, the hydrazide group comprising compound can be mixed with a solvent prior to addition to the vinyl polymer dispersion.

Typically, the hydrazide group comprising compound is added to the aqueous dispersion in such an amount that the weight ratio of the polymerized alpha, beta-ethylenically unsaturated monomers (A) over the one or more hydrazide group comprising crosslinker(s) (B) is comprised between 10 and 500, preferably between 20 and 200.

The aqueous dispersions of the present invention preferably comprise between 25 and 65 % by weight, more preferably between 40 and 55% by weight, of the mixture comprising copolymerized alpha, beta-ethylenically unsaturated monomers (A) and one or more crosslinker(s) (B).

The aqueous dispersions of the present invention are characterized by:

- a Z-average particle size, according to ISO 13321, comprised between 40 and 200 nm; preferably between 50 and 150 nm and most preferably between 60 and 120 nm and
- a Minimal Film Formation Temperature comprised between 5 and 60 °C, preferably between 10 and 50 °C and most preferably between 15 and 40 °C.

The polymerized alpha, beta-ethylenically unsaturated monomers (A) of the aqueous vinyl polymer dispersions of the present invention are prepared according to free radical emulsion copolymerization using one or more radical

initiators, optionally in combination with reducing agents and optionally in combination with one or more chain transfer agents.

Suitable radical initiators include alkali metal or ammonium persulfate, bis(2-ethylhexyl) peroxydicarbonate, di-n-butyl peroxydicarbonate, t-butyl perpivalate, t-butyl hydroperoxide, cumene hydroperoxide, dibenzoyl peroxide, dilauroyl peroxide, 2,2'-azobisisobutyronitrile, and 2,2'-azobis-2-methyl butyronitrile.

Suitable reducing agents, usable in combination with e.g. a persulfate or a hydroperoxide, include sodium metabisulfite, (iso)ascorbic acid, sodium formaldehyde sulfoxylate, BRUGGOLITE® FF6 M (obtainable from Bruggeman GmbH & Co. KG), thiosulfates, disulfates, hydrosulfates, and water-soluble amines, such as diethylene triamine, triethylene tetraamine, tetraethylene pentamine, N,N'-dimethyl ethanolamine, N,N-diethyl ethanolamine, and reducing salts, such as cobalt, iron, nickel and copper sulfate.

Suitable transfer agents include n-butyl mercaptan, mercaptopropionic acid, 2-ethylhexyl mercaptopropionate, n-dodecylmercaptan, t-dodecylmercaptan, n-butyl mercaptopropionate, 2-mercapto ethanol, n-octyl mercaptan, isodecyl mercaptan, octadecyl mercaptan, mercaptoacetic acid, allyl mercaptopropionate, allyl mercaptoacetate, crotyl mercaptopropionate, and crotyl mercaptoacetate. Non-sulfur based chain transfer agents include halogenated hydrocarbons and catalytic chain transfer agents. Also alpha-methyl styrene dimer or oligomers of alpha-methyl styrene dimer or diarylethene, such as diphenylethene, can be used.

The copolymerization of the monomer mixtures is generally carried out under atmospheric pressure at a temperature comprised between 40 and 100 °C, preferably between 60 and 90 °C, preferably in an atmosphere of an inert gas, such as nitrogen. If desired, however, it is also possible to carry out the copolymerization under elevated pressure and at a temperature comprised between 40 and 100 °C or at a temperature higher than 100 °C.

In a first embodiment the aqueous vinyl polymer dispersions of the present invention are prepared according to free radical emulsion polymerization based on the core-shell technology, wherein first monomer mixture (A1) is copolymerized, followed by the copolymerization of monomer mixture (A2) in the presence of copolymer (A1), or vice versa, by copolymerizing first monomer mixture (A2), followed by the copolymerization of monomer mixture (A1) in the presence of copolymer (A2).

In a second embodiment the aqueous vinyl polymer dispersions of the present invention are prepared according to a power-feed free radical emulsion polymerization based on the gradual composition technology, comprising feeding monomer mixture (A1) into a reactor from a feed vessel while feeding, simultaneously or after a delay, monomer mixture (A2) into the feed vessel while polymerizing the monomers in the reactor.

Power-feed free radical emulsion polymerization is known in the art and described by K.L. Hoy in Journal of Coatings Technology, Vol. 51, No. 651, 1979 and in US 6,617,389 B1 (Akzo Nobel N.V.), among others.

Any embodiment of free radical emulsion polymerization based on whatever technology intermediary the core-shell technology and the gradient composition technology is within the scope of the present invention.

The aqueous vinyl polymer dispersions of the present invention preferably are prepared according to a free radical emulsion polymerization comprising the steps of:

a) preparing monomer mixture or monomer pre-emulsion (A1) in feed vessel (FA1) and pre-emulsion monomer mixture (A2) in feed vessel (FA2);
b) feeding between 5 and 10% of monomer mixture or monomer pre-emulsion (A1) from feed vessel (FA1) and radical initiator into a polymerization reactor comprising copolymerizable surfactant in demineralized water, while maintaining the temperature within the range of from 50 to 100 °C;
c) feeding the remainder 90 to 95% of monomer mixture or monomer pre-emulsion (A1) from feed vessel (FA1) and initiator into the polymerization reactor at a constant flow rate (RA1) within a period comprised between 3 and 6 hours, while feeding, into feed-vessel (FA1), simultaneously or after a delay, monomer mixture or monomer pre-emulsion (A2) from feed vessel (FA2), at a constant flow rate (RA2), (RA2) preferably being identical to flow rate (RA1), within a period comprised between 3 and 6 hours, while continuously mixing and polymerizing the monomers of monomer mixture or monomer pre-emulsion (A1) and (A2) in the polymerization reactor at a temperature within the range of from 50 to 100 °C;
d) finalizing the polymerization at a temperature within the range of from 40 to 90 °C, preferably in the presence of a redox initiator system, for a period of at least 30 minutes;
e) adjusting the pH to a value comprised between 7.5 and 9 through addition of neutralizing agent;
f) adding the one or more crosslinker(s) (B).

Preferably from 0.5 to 6.0 % by weight, more preferably from 0.75 to 5 % by weight, and most preferably from 1.0 to 4.5 % by weight, of the total amount of copolymerizable surfactant, in an about twentyfold excess of demineralized water, is added to the polymerization reactor before initiation of step b).

Preferably monomer mixture or monomer pre-emulsion (A1) comprises monomers (i) to (v) and a predominant amount of non-ionic alpha, beta-ethylenically unsaturated monomers; preferably monomer mixture or monomer pre-emulsion (A2) comprises monomers (ii) to (vi) and a predominant amount of non-ionic alpha, beta-ethylenically unsaturated monomers.

Preferably the acid functional alpha, beta-ethylenically unsaturated monomer(s) (v) are partially converted into their salt(s).

Preferably the aqueous vinyl polymer dispersion comprises dispersed particles with a gradual change in composition wherein the polymer particles contain a broad range of copolymers with different glass transition temperatures, unlike with classical core/shell dispersions, where the particles contain copolymers with only two different glass transition temperature values.

The dispersed particles with gradual composition, as obtained from the method of the present invention, are characterized in that

- the difference between the (estimated) glass transition temperature of the polymerized alpha, beta-ethylenically unsaturated monomers at the start of the monomer feed and the (estimated) glass transition temperature of the polymerized alpha, beta-ethylenically unsaturated monomers at the end of the monomer feed is at least 20 °C, preferably at least 25°C, more preferably at least 30°C, most preferably at least 40°C (the glass transition temperature being calculated using the well-known Fox equation),
- the transition of the (estimated) glass transition temperature from the beginning of the monomer feed to the end of the monomer feed is continuously gradual.

The dispersed particles with gradual composition, as obtained from the method of the present invention, are further characterized in that the dispersed particles comprise polymerized alpha, beta-ethylenically unsaturated monomers having a glass transition temperature of at least 25°C (the glass transition temperature being calculated using the well-known Fox equation).

Preferably the value of the (estimated) glass transition temperature of the monomer feed gradually decreases from the beginning of the monomer feed to its lowest value at the end of the polymerization. Without being bound by theory, it is assumed that in the liquid state the copolymer fraction that results in the lowest interfacial tension between the polymer and the water phase will be at the periphery of the particle. As a rule of thumb this will be the copolymer fraction with the highest polarity.

The aqueous dispersions of the present invention preferably are used in water borne coating compositions, further comprising one or more organic solvents that aid film-formation, pigments (organic or inorganic), and/or other additives and fillers known in the art.

The amount of organic solvent shall be chosen in such a way as to provide a coating composition with a low volatile organic content (VOC), and preferably comprises less than 130 g/l (including water), preferably less than 100 g/l (including water) of volatile organic compounds, as calculated by ISO method 11890-2 in the ready to use form.

The water borne coating composition further comprises one or more additives selected from the group consisting of leveling agents, rheology agents, antiblocking agents, flow control agents, flatting agents, pigment wetting and dispersing agents, surfactants, ultraviolet (UV) absorbers, UV light stabilizer, corrosion inhibitors, thickening agents, plasticizers, fillers and pigments.

Preferably, the water borne coating composition comprises 0.0 % fluorine.

Non-limiting examples of inorganic pigments include iron oxide pigments, titanium oxide pigments, zinc oxide pigments, chromium oxide pigments coprecipitated with nickel and nickel titanates, yellow pigments from lead sulfochromate or lead bismuth vanadate, orange pigments from lead sulfochromate molybdate, and carbon black.

Non-limiting examples of suitable organic pigments include azo pigments, metal complex pigments, anthraquinonoid pigments, phthalocyanine pigments, polycyclic pigments, especially those of the thioindigo, quinacridone, dioxazine, pyrrolo, naphthalenetetracarboxylic acid, perylene, isoamidolin(on)e, flavanthrone, pyranthrone, and isoviolanthrone series.

Non-limiting examples of useful fillers include silicas, such as colloidal silicas, mica, talc, clays, aluminum silicates, chlorites, aluminum magnesium silicates, magnesium silicates and china clay.

The water borne coating composition of the present invention can be applied to a wide variety of substrates, selected from the group consisting of metal, glass, polymers (such as polyimide-amide, polyetherketone, polyethersulfone polyphenylsulfone or polybenzimidazole), composites, concrete, ceramics, solid wood, and engineered wood (such as medium density fibre board or high density fibre board, particle board or oriented strand board), provided said substrates resist to the stoving cycle conditions.

The water borne coating composition of the invention can be applied to a substrate using any suitable procedure such as brushing, spray coating, draw-down, roll coating, coil coating, curtain coating, immersion coating, dip coating, flow coating, ink-jetting, vacuum coating and the like.

In general the water borne coating compositions are applied at a liquid coating thickness adapted for obtaining a dry film thickness that is equal or less than 100 μm, preferably for obtaining a dry film thickness comprised between 5 and

100 μm, preferably between 10 and 80 μm, more preferably between 15 and 70 μm, most preferably between 20 and 60 μm.

The water borne coating composition, applied in one or more layers to the substrate, is subjected to curing conditions. Non-limiting examples of these conditions include air drying and baking. Curing is achieved by removing the water from the water borne coating while crosslinking. Although air drying may be used, sometimes heat-curing is preferred, for example on fast production lines (e.g. 25 m/min.). Generally, heat curing is effected by exposing the coated article, after a flash-off to remove most of the water, to curing temperatures in the range between 20 °C and 180 °C, preferably in the range between 30 °C and 150 °C, more preferably in the range between 40 °C and 100 °C, even more preferably in the range between 50 °C and 80 °C.

Curing temperatures will vary depending on the water borne coating composition and on the type of substrate used. The curing time will vary depending on the particular components used, and on physical parameters such as the thickness of the coating layers applied. Typical curing times range from 0.5 to 30 minutes, preferably from 1 to 25 minutes, more preferably from 2 to 20 minutes.

Solvent evaporation and curing of the coating may be performed in an air ventilated convection oven. Alternatively the coating may be cured by InfraRed irradiation, such as near, short or medium infrared, or by induction, or by a combination thereof. In an embodiment where infrared or induction systems are used, the stoving cycle is within the range comprised between 2 and 160 seconds, depending on the heating system or the combination of heating systems.

The present invention further provides a substrate selected from the group consisting of solid wood, engineered wood, metal, polymers, glass, composites, concrete, and ceramics, preferably a wooden substrate, coated with the composition of the invention.

In the context of the present description, "a wooden substrate" refers to a substrate of solid wood or of engineered wood (such as medium density fibre board or high density fibre board, particle board or oriented strand board), such as for example a piece of furniture.

In the context of the present description, "a piece of furniture" refers to any kind of furniture, domestic and industrial, such as tables, chairs, cupboards, etcetera.

## Examples

The following illustrative examples are merely meant to exemplify the present invention but are not intended to limit or otherwise define the scope of the present invention.

## Test Methods

### Solid content of a vinyl polymer dispersion

The content of non-volatile matter is the weight of the residue of a sample when heated under described conditions in an oven. It is expressed as a percentage of the original sample weight. This method follows ASTM 4758-92 and ISO 3251.

### Determination of minimal film-formation temperature (MFFT)

The MFFT was determined by using a Rhopoint MFFT-Bar60 which has a temperature range from 0 °C to 60 °C. Films were applied with a wet film thickness of 25 microns. The MFFT was the lowest temperature at which the film showed no cracks.

### Determination of particle size

Particle size was determined by dynamic light scattering using a Malvern Zetasizer model Nano - S90. The Z-average value was reported as the particle size. The Z-average diameter is the mean hydrodynamic diameter and is calculated according to the International Standard on dynamic light scattering ISO13321.

### Determination of pH

The pH was measured using a ProLine QIS pH meter according to DIN 19268.

### Determination of Brookfield viscosity

Brookfield viscosity is measured with a Brookfield RVT viscometer at a temperature of 23 ± 1 °C, according to

ISO 2555-1974.

Determination of bio-based carbon content

The amount of bio-based carbon is determined by the method described in ASTM D6866-20.

Example 1

In a double-walled reactor with a mechanical stirrer, nitrogen supply, cooler and inlet for monomer and initiator feed lines, 797.1 grams of demineralized water and 48.0 grams of ADEKA REASOAP® SR-1025 were weighed in and heated to 72 °C under a nitrogen blanket (= reactor pre-charge).

Two monomer pre-emulsions (A1) and (A2) were made by mixing in a beaker the ingredients in table 1.1 and table 1.2, respectively, under stirring.

Table 1.1

| Raw material | Weight (g) |
|---|---|
| Demineralized water | 250.7 |
| ADEKA REASOAP® SR-1025 (25% aqueous solution) | 15.72 |
| Diacetone acrylamide | 41.89 |
| Ammonia (25% aqueous solution) | 1.73 |
| 2-Ethylhexyl acrylate | 213.3 |
| Styrene | 84.26 |
| Methyl methacrylate | 311.23 |
| Methacrylic acid | 28.99 |
| Divinyl benzene HP | 6.94 |
| SILQUEST® 174NT | 6.94 |

Table 1.2

| Raw material | Weight (g) |
|---|---|
| Demineralized water | 227.9 |
| ADEKA REASOAP® SR-1025 (25% aqueous solution) | 14.16 |
| Ammonia (25% aqueous solution) | 0.7 |
| 2-Ethylhexyl acrylate | 295 |
| Styrene | 266.2 |
| Methyl methacrylate | 65.89 |
| Methacrylic acid | 13.3 |
| N-(2-methacryloyl oxyethyl) ethylene urea, 25% in methyl methacrylate | 26.5 |
| Divinyl benzene HP | 6.81 |
| SILQUEST® 174NT | 6.81 |

When the contents of the reactor had reached 72 °C, 5 % of the monomer pre-emulsion (A1) was added over a period of 5 minutes. A solution of 1.45 grams of ammonium persulfate in 13.9 grams of demineralized water was added to the reactor (= seed initiator) whereupon exothermal reaction occurred. When the exotherm subsided, 0.18 grams of ammonia (25% aqueous solution) was added to the reactor (= 1st neutralization). Heating was continued until a temperature of 79 °C was reached. An initiator solution consisting of 2.43 grams of ammonium persulfate in 227.4 grams of demineralized water was prepared (= feed initiator).

Pre-emulsion monomer mixture (A1) was dosed into the reactor over a period of 240 minutes. Simultaneously the pre-emulsion monomer mixture (A2) was dosed in the tank that was holding pre-emulsion monomer mixture (A1) over a

period of 240 minutes. The contents of this tank were mixed continuously. After the dosing was ended, 80 grams of demineralized water was used to rinse both monomer pre-emulsion tanks. These water rinses were added to the batch (= rinse).

Simultaneously with the pre-emulsions, the feed initiator solution was dosed to the reactor.

After the dosing, the batch was kept at 79 °C for an additional 30 minutes.

The reaction was finished by cooling the reactor to 65 °C and adjusting the pH with a solution of 12.9 grams of ammonia (25% aqueous solution) (= 2$^{nd}$ neutralization) in 20.2 grams of demineralized water. The reactor contents were kept at 65 °C for a period of 30 minutes. A solution of 1.8 grams of TRIGONOX® AW-70 in 6.3 grams of demineralized water was added to the reactor, followed by dosing a solution of 0.98 grams BRUGGOLITE® FF6 M in 10.8 grams of demineralized water over a period of 15 minutes. The contents of the reactor were kept at 65 °C for another period of 30 minutes. To the reactor, 25.9 grams of adipic acid dihydrazide (crosslinker (B)) was then added. The batch was cooled to a temperature below 40 °C. During the cooling, a solution of 6.1 grams of ammonia (25% aqueous solution) dissolved in 11.7 grams of demineralized water (= 3$^{rd}$ neutralization) and 9.31 grams of PROXEL® AQ ("biocide addition") were added. The batch was filtered over a filter mesh and stored in a suitable container. Analysis of the vinyl polymer dispersion gave the following results:

Solids content according to ISO 3251: 44.4%; pH: 8.7; particle size (Z average mean): 84 nm; Brookfield viscosity 25.1 cPa.s (Spindle L2, speed 50 rpm) and MFFT: 27 °C.

Example 2

According to the process outlined in example 1, a second aqueous dispersion was made by reacting the raw materials in table 2.

Table 2

| Phase | Raw material | Weight (g) |
|---|---|---|
| Reactor pre-charge | Demineralized water | 797.1 |
| | ADEKA REASOAP® SR-1025 | 48 |
| Seed Initiator | Demineralized water | 13.9 |
| | Ammonium persulfate | 1.45 |
| 1$^{st}$ Neutralization | Ammonia (25% aqueous solution) | 0.18 |
| Monomer pre-emulsion (A1) | Demineralized water | 250.7 |
| | ADEKA REASOAP® SR-1025 | 15.72 |
| | Diacetone acrylamide | 41.89 |
| | Ammonia (25% aqueous solution) | 1.73 |
| | 2-Ethylhexyl acrylate | 213.3 |
| | Styrene | 84.26 |
| | Methyl methacrylate | 304.3 |
| | Methacrylic acid | 28.99 |
| | Divinyl benzene HP | 13.88 |
| | SILQUEST® 174NT | 6.94 |
| Monomer pre-emulsion (A2) | Demineralized water | 227.9 |
| | ADEKA REASOAP® SR-1025 | 14.16 |
| | Ammonia (25% aqueous solution) | 0.7 |
| | 2-Ethylhexyl acrylate | 295 |
| | Styrene | 266.2 |
| | Methyl methacrylate | 59.08 |
| | Methacrylic acid | 13.3 |
| | N-(2-methacryloyloxyethyl)ethylene urea, 25% in methyl methacrylate | 26.5 |

(continued)

| Phase | Raw material | Weight (g) |
|---|---|---|
| | Divinyl benzene HP | 13.62 |
| | SILQUEST® 174NT | 6.81 |
| Feed Initiator | Demineralized water | 227.4 |
| | Ammonium persulfate | 2.43 |
| Rinse | Demineralized water | 80 |

Table 2 (continued)

| Phase | Raw material | Weight (g) |
|---|---|---|
| 2nd Neutralization | Ammonia (25% aqueous solution) | 12.9 |
| | Demineralized water | 20.2 |
| Oxidizer solution | Demineralized water | 6.3 |
| | TRIGONOX® AW-70 (70% aqueous) | 1.8 |
| Reducer solution | Demineralized water | 10.8 |
| | BRUGGOLITE® FF6 M | 0.98 |
| Crosslinker (B) | Adipic acid dihydrazide | 25.9 |
| 3rd neutralization | Demineralized water | 11.7 |
| | Ammonia (25% aqueous solution) | 6.1 |
| Biocide addition | PROXEL® AQ (aqueous solution of 1,2-benzisothiazol-3(2H)-one) | 9.31 |

Analysis of the vinyl polymer dispersion gave the following results: Solids content: 44.6%; pH 8.8; particle size 91 nm; Brookfield viscosity 23,6 cPa.s (Spindle L2, speed 50 rpm); MFFT= 29 °C.

Comparative Examples 1 and 2

According to the process described in example 1, two comparative examples were synthesized: comparative example 1 (C1), where a non-polymerizable surfactant was used (RHODAFAC® RS 710) and comparative example 2 (C2), without N-(2-methacryloyloxyethyl)ethylene urea (vi). The raw materials are represented in table 3.

Table 3

| Stage | Raw Material | Comp. Ex. 1 | Comp. Ex. 2 |
|---|---|---|---|
| Reactor pre-charge | Demineralized water | 834.61 | 797.88 |
| | RHODAFAC® RS 710 | 12.02 | 0.00 |
| | ADEKA REASOAP® SR-1025 (25% in water) | 0.00 | 48.04 |
| 1st Neutralization | Ammonia (25% aqueous solution) | 1.40 | 0.18 |
| Seed Initiator | Demineralized water | 13.93 | 13.92 |
| | Ammonium persulfate | 1.45 | 1.45 |
| Monomer pre-emulsion (A1) | Demineralized water | 262.98 | 250.87 |
| | RHODAFAC® RS 710 | 3.94 | - |
| | ADEKA REASOAP® SR-1025 (25% in water) | - | 15.74 |
| | Diacetone acrylamide | 41.98 | 41.94 |
| | Ammonia (25% aqueous solution) | 1.66 | 1.73 |
| | 2-Ethylhexyl acrylate | 447.71 | 285.90 |

(continued)

| Stage | Raw Material | Comp. Ex. 1 | Comp. Ex. 2 |
|---|---|---|---|
| | Styrene | 84.25 | 84.34 |
| | Methyl methacrylate | 91.98 | 252.88 |
| | Methacrylic acid | 28.75 | 29.02 |
| Monomer pre-emulsion (A2) | Demineralized water | 238.93 | 228.08 |
| | RHODAFAC® RS 710 | 3.55 | - |
| | ADEKA REASOAP® SR-1025 (25% in water) | - | 14.19 |
| | Ammonia (25% aqueous solution) | 1.30 | 0.70 |
| | 2-Ethylhexyl acrylate | 44.96 | 44.90 |
| | Styrene | 266.68 | 266.39 |
| | Methyl methacrylate | 328.49 | 354.77 |
| | N-(2-methacryloyloxyethyl)ethylene urea, 25% in methyl methacrylate | 26.65 | - |
| | Methacrylic acid | 13.32 | 13.33 |
| Feed Initiator | Demineralized water | 227.81 | 227.58 |
| | Ammonium persulfate | 2.43 | 2.43 |

Table 3 (continued)

| Stage | Raw Material | Comp. Ex. 1 | Comp. Ex. 2 |
|---|---|---|---|
| Rinse | Demineralized water | 80.15 | 80.06 |
| 2nd Neutralization | Ammonia (25% aqueous solution) | 12.92 | 12.92 |
| | Demineralized water | 20.24 | 20.20 |
| Oxidizer solution | Demineralized water | 6.31 | 6.32 |
| | TRIGONOX® AW-70 (70% aqueous) | 1.80 | 1.80 |
| Reducer solution | Demineralized water | 10.82 | 10.83 |
| | Sodium formaldehyde sulfoxylate | 0.80 | - |
| | BRUGGOLITE® FF6 M | - | 0.98 |
| Crosslinker (B) | Adipic acid dihydrazide | 25.95 | 25.93 |
| 3rd neutralization | Demineralized water | 11.72 | 11.69 |
| | Ammonia (25% aqueous solution) | 5.11 | 5.09 |
| Biocide addition | PROXEL® AQ (aqueous solution of 1,2-benzisothiazol-3(2 H)-one) | 9.33 | 9.33 |

Characteristics of the aqueous dispersions of comparative example 1 and comparative example 2 are reported in table 4.

Table 4

| Characteristic | Comp. Ex. 1 | Comp. Ex. 2 |
|---|---|---|
| Solids content (%) | 44.8 | 44.6 |
| pH | 8.5 | 8.7 |
| Particle size (nm) | 84 | 86 |
| Brookfield viscosity (cPa.s, Spindle L2, speed 50 rpm) | 75 | 113 |

(continued)

| Characteristic | Comp. Ex. 1 | Comp. Ex. 2 |
|---|---|---|
| MFFT (°C) | 20 | 60 |

Comparative Examples 3 to 7

Following the process described in example 1, further comparative examples 3 to 7 ((C3) to (C7)) were synthesized, wherein:

- comparative example 3 (C3) does not comprise an alpha, beta-ethylenically unsaturated monomer (ii) having a silane group and does not comprise a polyfunctional alpha, beta-ethylenically unsaturated monomer (iii);
- comparative example 4 (C4) does not comprise an alpha, beta-ethylenically unsaturated monomer (ii) having a silane group;
- comparative example 5 (C5) does not comprise a polyfunctional alpha, beta-ethylenically unsaturated monomer (iii);
- comparative example 6 (C6) does not comprise an adhesion promoting alpha, beta-ethylenically unsaturated nitrogen containing monomer (vi); and
- comparative example 7 (C7) does not comprise an alpha, beta-ethylenically unsaturated monomer(s) (i) having a crosslinkable group and does not comprise crosslinker (B).

The compositions are represented in table 5.

Table 5

| | Raw Material | C3 | C4 | C5 | C6 | C7 |
|---|---|---|---|---|---|---|
| Reactor pre-charge | Demineralized water | 797.1 | 791.1 | 791.1 | 797.1 | 784.15 |
| | ADEKA REASOAP® SR-1025 (25% in water) | 48 | 48 | 48 | 48 | 48 |
| Seed monomers | Monomer mixture A (for seed polymerization) | 48.5 | 48.5 | 48.5 | 48.5 | 48.5 |
| Seed initiator | Demineralized water | 13.9 | 13.9 | 13.9 | 13.9 | 13.9 |
| | Ammonium persulfate | 1.45 | 1.45 | 1.45 | 1.45 | 1.45 |
| 1st Neutralization | Ammonia (25% aqueous solution) | 0.18 | 0.18 | 0.18 | 0.18 | 0.18 |
| Monomer pre-emulsion (A1) | Demineralized water | 250.7 | 250.7 | 250.7 | 250.7 | 250.7 |
| | ADEKA REASOAP® SR-1025 (25% in water) | 15.72 | 15.72 | 15.72 | 15.72 | 15.72 |
| | Diacetone acrylamide | 41.89 | 41.89 | 41.89 | 41.89 | - |
| | Ammonia (25% aqueous solution) | 1.73 | 1.73 | 1.73 | 1.73 | 1.73 |
| | 2-Ethylhexyl acrylate | 213.3 | 213.3 | 213.3 | 213.3 | 213.3 |
| | Styrene | 84.26 | 84.26 | 84.26 | 84.26 | 84.26 |
| | Methyl methacrylate | 325.1 | 311.23 | 311.23 | 311.23 | 353.12 |
| | Methacrylic acid | 28.99 | 28.99 | 28.99 | 28.99 | 28.99 |
| | Divinyl benzene HP | - | 6.94 | - | 6.94 | 6.94 |
| | SILQUEST® 174NT | - | - | 6.94 | 6.94 | 6.94 |

Table 5 (continued)

| | Raw Material | C3 | C4 | C5 | C6 | C7 |
|---|---|---|---|---|---|---|
| | Demineralized water | 227.9 | 227.9 | 227.9 | 227.9 | 227.9 |

(continued)

| | Raw Material | C3 | C4 | C5 | C6 | C7 |
|---|---|---|---|---|---|---|
| Monomer pre-emulsion (A2) | Adeka Reasoap SR-1025 (25% in water) | 14.16 | 14.16 | 14.16 | 14.16 | 14.16 |
| | Ammonia (25% aqueous solution) | 0.7 | 0.7 | 0.7 | 0.7 | 0.7 |
| | 2-Ethylhexyl acrylate | 295 | 295 | 295 | 295 | 295 |
| | Styrene | 266.2 | 266.2 | 266.2 | 266.2 | 266.2 |
| | Methyl methacrylate | 79.5 | 65.89 | 65.89 | 92.39 | 65.89 |
| | Methacrylic acid | 13.3 | 13.3 | 13.3 | 13.3 | 13.3 |
| | N-(2-methacryloyloxyethyl)ethylene urea, 25% in methyl methacrylate | 26.5 | 26.5 | 26.5 | - | 26.5 |
| | Divinyl benzene HP | - | 6.81 | - | 6.81 | 6.81 |
| | SILQUEST® 174NT | - | - | 6.81 | 6,81 | 6.81 |
| Feed initiator | Demineralized water | 227.4 | 227.4 | 227.4 | 227.4 | 227.4 |
| | Ammonium persulfate | 2.43 | 2.43 | 2.43 | 2.43 | 2.43 |
| Rinse | Demineralized water | 80 | 80 | 80 | 80 | 80 |
| 2nd neutralization | Ammonia (25% aqueous solution) | 12.9 | 12.9 | 12.9 | 12.9 | 12.9 |
| | Demineralized water | 20.2 | 20.2 | 20.2 | 20.2 | 20.2 |
| Oxidizer solution | Demineralized water | 6.3 | 6.3 | 6.3 | 6.3 | 6.3 |
| | TRIGONOX® AW-70 (70% aqueous) | 1.8 | 1.8 | 1.8 | 1.8 | 1.8 |
| Reducer solution | Demineralized water | 10.8 | 10.8 | 10.8 | 10.8 | 10.8 |
| | BRUGGOLITE® FF6 M | 0.98 | 0.98 | 0.98 | 0.98 | 0.98 |
| Crosslinker (B) | Adipic acid dihydrazide | 25.9 | 25.9 | 25.9 | 25.9 | - |
| 3rd neutralization | Demineralized water | 11.7 | 11.7 | 11.7 | 11.7 | 11.7 |
| | Ammonia (25% aqueous solution) | 6.1 | 6.1 | 6.1 | 6.1 | 6.1 |
| Biocide | PROXEL® AQ (aqueous solution of 1,2-benzisothiazol-3(2H)-one) | 9.31 | 9.31 | 9.31 | 9.31 | 9.31 |

Characteristics of the aqueous dispersions of comparative example 3 to comparative example 7 are reported in table 6.

Table 6

| Comp. Example | pH | Particle size (nm) | Solids content (%) | Viscosity (mPa.s) | MFFT (°C) |
|---|---|---|---|---|---|
| C3 | 8.8 | 82 | 44.6 | 1308 | 25 |
| C4 | 8.8 | 88 | 44.5 | 400 | 26 |
| C5 | 8.8 | 79 | 44.0 | 1116 | 22 |
| C6 | 8.8 | 83 | 44.7 | 730 | 28 |
| C7 | 8.9 | 85 | 44.2 | 219 | 28 |

Example 3

The aqueous dispersions of example 1 and 2 and comparative examples 1 to 7 were formulated to a water borne clear and pigmented coating respectively.

Clear coating preparation

For the clear coating preparation, 20 grams of demineralized water and 6 grams of butyl diglycol, followed by 1 gram of BYK® 024, was added under stirring to 100 grams of the binder (the binder being copolymerized alpha, beta-ethylenically unsaturated monomers (A) and crosslinker (B)). Next, 0.5 to 1.0 grams of BORCHI® Gel L75N/water 1:1 (OMG Borchers GmbH) was added under stirring until a Brookfield viscosity was obtained in the range of 4000 mPa.s.

White pigmented coating

Pigment paste: In a suitable recipient, 50.7 grams of SETAQUA® 6302 (Acrylic dispersing resin commercially available from Allnex Netherlands BV) were mixed with 52.7 grams of demineralized water. Under low speed stirring, 3.4 grams of butyl glycol were slowly added, followed by 0.4 grams of BYK®-024 (VOC-free silicone-containing defoamer from Byk Chemie). 129.2 grams of KRONOS® 2190 (rutile titanium dioxide from Kronos, oil absorption (DIN EN ISO 787-5): 18 g / 100 g), 20.0 grams of CERIDUST® 9615A (a slip and rub resistance additive from Clariant Ltd.) and 1.7 grams of COAPUR™ 830W (a polyurethane thickener from Coatex) were added. This mixture was grinded on a high speed impeller until a fineness of less than 10 μm is obtained. The temperature is not allowed to rise above 40 °C during this process. Coating formulation: To 27.7 grams of the pigment paste, 59.2 grams of the binder were added, followed by 2.9 grams of demineralized water. Depending on the minimal film formation temperature of the binder, an amount in between 4.8 and 6.0 grams of butyl diglycol was added followed by 1 gram of TEGO® AIREX 902 W (defoamer available from Evonik). Finally the viscosity is adjusted to 55 s using a DIN-cup 4 with from 1.3 to 2.1 grams of ADDITOL® VXW 6360 (polyurethane thickener available from Allnex).

Example 4

The coating compositions of example 3 were applied onto primed MDF panels by spray coating. The wet film thickness of the coatings was 150 μm. After 60 minutes of flash off at 23 °C, the coated plates were cured for 16 hours at 50 °C.

Example 5

Clear and pigmented coatings of the aqueous dispersions of example 1 and 2 and of comparative examples 1 to 7, prepared according to the coating formulations of example 3, and applied and cured according to the application method and the curing profile of example 4, were tested for alcohol (48% aqueous), coffee and cold distilled water resistance according to EN12720, "covered spot test", wherein 1 ml spot of test liquid is placed on the horizontal coated substrate, conditioned at a temperature of 23 +/-2 °C and a relative humidity of 50 +/-5 %, and immediately covered with a watch glass. Contact periods for alcohol and coffee test fluids were 1 and 6 hours for each, respectively; contact period for distilled water was 24 hours. After the respective contact periods the panel was wiped clean and evaluated immediately as well as after a recovery of 16-24 hours (immediately/after recovery) for discoloration, change in gloss, blistering, softening, swelling, and loss of adhesion, wherein "5" stands for the best result (5 = no change in gloss, blistering, adhesion, etc.) and "0" stands for the worst result (0 = change in gloss, blistering, adhesion, etc.). Results of evaluation (immediately vs after recovery) are shown in table 7 (denoted as immediately / after recovery). In case a gloss change is visually observed at the clean wiped spot location, this is reported by "g" in table 7 as well.

The early blocking resistance was tested by placing two coated surfaces in contact with each other under a fixed pressure for a given time and temperature. In these experiments the coatings were applied onto Leneta test charts at a wet film thickness of 150 μm. The coatings were dried for 4 hours at room temperature. Blocking resistance was tested during a period of 4 hours at 50 °C and an applied pressure of 1 kg/cm2. After cooling the two surfaces were separated and examined. The degree of blocking is rated subjectively for tack or seal using a series of standard descriptive terms corresponding to numerical ASTM values of 10 to 0. If the panels are fully adhered, that is complete failure (0). If they can be separated without any problem, blocking resistance is rated at 10. Guidance on the rating of blocking resistance can be found in ASTM D4946-89(2017), Standard Test Method for Blocking Resistance of Architectural Paints.

König hardness was measured according to ASTM D4366-95. The coating was applied at a 100μm wet layer thickness on glass. The coating was then dried at room temperature followed by 16h drying at 50 °C.

Coating performances are reported in table 7.

From the results in table 7, it clearly appears that only vinyl polymer dispersions according to the invention, give a balanced performance with improved chemical-, stain- and blocking resistance, compared to the dispersions of the comparative examples.

| Dispersion of example | Clear varnish | | | | White topcoat | | | | Blocking resistance | Early $H_2O$ resistance | König hardness |
|---|---|---|---|---|---|---|---|---|---|---|---|
| | Alcohol 48% | | Coffee | | Alcohol 48% | | coffee | | 150µm | 4h | s |
| | 1 h | 6 h | 1 h | 6 h | 1 h | 6 h | 1 h | 6 h | | Direct/after recovery | |
| Ex. 1 | 4/4 | 3.5/4 | 5/5 | 5/5 | 2 (g)/4 (g) | 3 (g)/4 | 5/5 | 4.5/4.5 | 5 | 5/5 | 108 |
| Ex. 2 | 5/5 | 5/5 | 5/5 | 5/5 | 3.5 (g)/4 (g) | 3.5 (g)/3.5 (g) | 4.5/5 | 4.5/4.5 | 8 | 5/5 | 119 |
| C1 | 2/3 | 2/3 | 4.5/4.5 | 4/4 | 2/3 | 2/3 | 3/3 | 2/2 | 0 | 1/5 | 71 |
| C2 | 2/3.5 | 2/3 | 5/5 | 5/5 | 2/3 | 2/3 | 4.5/4.5 | 4/4 | 0 | 3/5 | 150 |
| C3 | 3/3 | 3/3 | 5/5 | 5/5 | 3/5 | 3/5 | 4/4 | 4/4 | 0 | 0/5 | 102 |
| C4 | 3.5/3.5 | 3.5/3.5 | 5/5 | 5/5 | 3 (g)/3 (g) | 3 (g)/3 (g) | 4/4 | 4/4 | 0 | 5/5 | 122 |
| C5 | 4/4 | 4/4 | 5/5 | 5/5 | 3 (g)/5 | 3 (g)/5 | 4.5/4.5 | 4/5 | 2 | 4.5/5 | 90 |
| C6 | 4/4 | 4/4 | 5/5 | 5/5 | 3 (g)/4 | 4 (g)/4.5 | 4.5/4.5 | 4.5/4.5 | 4 | 2/4.5 | 113 |
| C7 | 3/4.5 | 4/4.5 | 5/5 | 5/5 | 3 (g)/3 | 3.5 (g)/4 (g) | 4.5/4.5 | 4/4 | 0 | 5/5 | 99 |

Table 7

Examples 8 - 9

According to the process of example 1, vinyl polymer dispersions were made comprising bio-based monomers. The compositions are given in table 8.

Table 8

| Phase | Raw material | Weight (g) | |
|---|---|---|---|
| | | ex. 8 | ex. 9 |
| Reactor pre-charge | Demineralized water | 756.40 | 806.82 |
| | ADEKA REASOAP® SR-1025 (25% in water) | 45.55 | 48.59 |
| Seed Initiator | Demineralized water | 13.19 | 14.07 |
| | Ammonium persulfate | 1.38 | 1.47 |
| 1st Neutralization | Ammonia (25% aqueous solution) | 0.17 | 0.18 |
| Monomer pre-emulsion (A1) | Demineralized water | 237.90 | 253.76 |
| | ADEKA REASOAP® SR-1025 (25% in water) | 14.92 | 15.91 |
| | Diacetone acrylamide | 39.75 | 42.40 |
| | Ammonia (25% aqueous solution) | 1.64 | 1.75 |
| | Heptyl acrylate | 202.41 | - |
| | Isobutyl acrylate | - | 267.20 |
| | Styrene | 79.96 | 85.29 |

(continued)

| Phase | Raw material | Weight (g) | |
|---|---|---|---|
| | | ex. 8 | ex. 9 |
| | Methyl methacrylate | 288.76 | - |
| | Isobornyl methacrylate | - | 256.73 |
| | Methacrylic acid | 27.51 | 29.34 |
| | Divinyl benzene HP | 13.17 | 14.05 |
| | SILQUEST® 174NT | 6.58 | 7.02 |

Table 8 (continued)

| Phase | Raw material | Weight (g) | |
|---|---|---|---|
| | | ex. 8 | ex. 9 |
| Monomer pre-emulsion (A2) | Demineralized water | 216.26 | 230.68 |
| | ADEKA REASOAP® SR-1025 (25% in water) | 13.44 | 14.33 |
| | Ammonia (25% aqueous solution) | 0.67 | 0.71 |
| | Heptyl acrylate | 279.94 | - |
| | Isobutyl acrylate | - | 290.30 |
| | Styrene | 252.61 | 269.45 |
| | Methyl methacrylate | 56.06 | 68.10 |
| | Methacrylic acid | 12.62 | 13.46 |
| | N-(2-methacryloyloxyethyl)ethylene urea, 25% in methyl methacrylate | 25.15 | 26.82 |
| | Divinyl benzene HP | 12.92 | 13.79 |
| | SILQUEST® 174NT | 6.46 | 6.89 |
| Feed Initiator | Demineralized water | 215.79 | 230.17 |
| | Ammonium persulfate | 2.31 | 2.46 |
| Rinse | Demineralized water | 75.92 | 80.98 |
| 2nd Neutralization | Ammonia (25% aqueous solution) | 12.24 | 13.06 |
| | Demineralized water | 19.17 | 20.45 |
| Oxidizer solution | Demineralized water | 5.98 | 6.38 |
| | TRIGONOX® AW-70 (70% aqueous) | 1.71 | 1.82 |
| Reducer solution | Demineralized water | 10.25 | 10.93 |
| | BRUGGOLITE® FF6 M | 0.93 | 0.99 |
| Crosslinker (B) | Adipic acid dihydrazide | 24.58 | 26.22 |
| 3rd neutralization | Demineralized water | 11.10 | 11.84 |
| | Ammonia (25% aqueous solution) | 5.79 | 6.17 |
| Biocide addition | PROXEL® AQ (aqueous solution of 1,2-benzisothiazol-3(2H)-one ) | 8.83 | 9.42 |

Example 8 comprises n-heptyl acrylate that is obtained by esterifying n-heptanol, from OLERIS® Advanced Bio-Materials, with acrylic acid. The heptanol is derived from castor oil and is completely bio-based.

Example 9 uses isobornyl methacrylate (71 % bio-based carbon content) and isobutyl acrylate (70 % bio-based

carbon content) as partially bio-based monomers. In these monomers, the alcohol moiety is derived from renewable sources.

The properties for examples 8 and 9 are given below:

Table 9

| Property | Example 8 | Example 9 |
|---|---|---|
| Solids content (%) | 44.5 | 44.6 |
| pH | 8.9 | 8.9 |
| Viscosity (mPa.s) | 133 | 218 |
| Particle size (nm) | 91 | 96 |
| Bio-based carbon (%) | 28 | 34 |
| MFFT (°C) | 25 | 67 |

Example 10

Clear and pigmented coating formulations based on partially renewable vinyl polymer dispersions from examples 8 and 9 where prepared as, applied and cured as out-lined in example 3, 4 and 5. The exact amount of ingredients used is given in table 10 (clear coating) and table 11 (mat pigmented coating).

Table 10

| | | | |
|---|---|---|---|
| Dispersion from example 2 | 100 | | |
| Dispersion from example 8 | | 100 | |
| Dispersion from example 9 | | | 100 |
| Water | 20 | 20 | 20 |
| DOWANOL® DPnB | 6 | 6 | 6 |
| BYK® 024 | 1 | 1 | 1 |
| BORCHIGEL® L75N / water 1:1 | 1.8 | 0.7 | 1.6 |

Table 11

| | |
|---|---|
| **Millbase** | |
| SETAQUA® 6302 | 50.7 |
| Water | 52.7 |
| Butyl glycol | 3.4 |
| BYK® 024 | 0.4 |
| KRONOS® 2090 | 129.2 |
| COAPUR™ 830W | 2.5 |
| | |
| Vinyl polymer dispersion from example 2, 8 or 9 | 59.30 |
| Millbase | 25.80 |
| Water | 2.90 |
| DOWANOL® DPnB | 3.60 |
| TEGO® Airex 902W | 1.00 |
| SPHEROMER® CA6 | 4.00 |

Evaluation results for the clear coatings are shown in Table 12.

Table 12

| Vinyl polymer dispersion from | ex. 2 | ex. 8 | ex.9 |
|---|---|---|---|
| Hardness König | 137 | 111 | 147" |
| Chemical resistance | | | |
| Alcohol 1h | 5 | 5 | 5 |
| After 24h recovery | 5 | 5 | 5 |
| Alcohol 6h | 4 | 5 | 5 |
| After 24h recovery | 5 | 5 | 5 |
| Coffee 1h | 5 | 5 | 5 |
| After 24h recovery | 5 | 5 | 5 |
| Coffee 6h | 5 | 5 | 5 |
| After 24h recovery | 5 | 5 | 5 |
| Early water resistance | | | |
| 1h | 5/5 | 5/5 | 5/5 |
| 2h | 5/5 | 5/5 | 5/5 |
| 3h | 5/5 | 5/5 | 5/5 |
| 4h | 5/5 | 5/5 | 5/5 |
| 5h | 5/5 | 5/5 | 5/5 |
| 6h | 5/5 | 5/5 | 5/5 |
| 5 = OK, 0 = NOK (i.e. not OK).<br>N/N = immediately after exposure / after recovery. | | | |

It can be concluded that the results of testing of partially bio-based examples 8 and 9 in a clear coating are equal to those for example 2 that was based on petrochemical raw materials only.

Evaluation results for the pigmented coatings are shown in Table 13.

Table 13

| Vinyl polymer dispersion from | ex. 2 | ex. 8 | ex.9 |
|---|---|---|---|
| Hardness König (s) | 86 | 90 | 108 |
| Gloss 20-60° | 4-20 | 4 - 22 | 4-23 |
| Chemical resistance | | | |
| Alcohol 1h | 3 | 3 | 2 |
| After 24h recovery | 4.5 | 4.5 | 2.5 |
| Alcohol 6h | 2 | 3 | 2 |
| After 24h recovery | 4 | 3 | 2.5 |
| Gloss difference 60° 1h after recovery (%) | 8.4 | 10.7 | 8.5 |
| Gloss difference 60° 6h after recovery (%) | 9.6 | 9.6 | 6.7 |
| Coffee 1h | 4-5 | 4-5 | 4-5 |
| After 24h recovery | 4.5 | 4-5 | 4-5 |
| Coffee 6h | 4-5 | 4 | 4-5 |
| After 24h recovery | 4-5 | 4 | 4-5 |

(continued)

| Early water resistance | | | |
|---|---|---|---|
| 1h | 5/5 | 5/5 | 5/5 |
| 2h | 4/5 | 4/5 | 5/5 |
| 3h | 4/5 | 4/5 | 4/5 |
| 4h | 4/5 | 4/5 | 4/5 |
| 5h | 4/5 | 4/5 | 4/5 |
| 6h | 4/5 | 4/5 | 4/5 |
| 5 = OK, 0 = NOK (i.e. not OK).<br>N/N = immediately after exposure / after recovery. | | | |

It can be concluded again that the results of testing of partially bio-based examples 8 and 9 in a mat pigmented coating are equal to those for example 2 that was based on petrochemical raw materials only.

## Claims

1. An aqueous, non-fluorine containing, vinyl polymer dispersion comprising:

   - the reaction product of free radical emulsion polymerized alpha, beta-ethylenically unsaturated monomers (A) of a monomer mixture (A1) and a monomer mixture (A2), and
   - one or more crosslinker(s) (B),

   said alpha, beta-ethylenically unsaturated monomers (A) comprising:

   - one or more alpha, beta-ethylenically unsaturated monomer(s) (i) having a crosslinkable group;
   - one or more alpha, beta-ethylenically unsaturated monomer(s) (ii) having a silane group;
   - one or more polyfunctional alpha, beta-ethylenically unsaturated monomer(s) (iii);
   - one or more copolymerizable surfactant(s) (iv); and
   - further non-ionic alpha, beta-ethylenically unsaturated monomers being different from monomers (i) to (iv).

2. The polymer dispersion according to claim 1, wherein the alpha, beta-ethylenically unsaturated monomers (A) of a monomer mixture (A1) and a monomer mixture (A2) comprise:

   - from 1.0 to 10.0 % by weight of one or more alpha, beta-ethylenically unsaturated monomer(s) (i) having a crosslinkable group;
   - from 0.5 to 5.0 % by weight of one or more alpha, beta-ethylenically unsaturated monomer(s) (ii) having a silane group;
   - from 0.5 to 3.0 % by weight of one or more polyfunctional alpha, beta-ethylenically unsaturated monomer(s) (iii); and
   - from 0.5 to 5.0 % by weight of one or more copolymerizable surfactant(s) (iv);
   on the total of alpha, beta-ethylenically unsaturated monomers,
   the remainder, up to 100% by weight, being non-ionic alpha, beta-ethylenically unsaturated monomers being different from monomers (i) to (iv).

3. The polymer dispersion according to claim 1 or 2, wherein the alpha, beta-ethylenically unsaturated monomers (A) of a monomer mixture (A1) and a monomer mixture (A2) additionally comprise:

   - one or more acid functional alpha, beta-ethylenically unsaturated monomer(s) (v);
   - one or more adhesion promoting alpha, beta-ethylenically unsaturated nitrogen containing monomer(s) (vi).

4. The polymer dispersion according to claim 3, wherein the alpha, beta-ethylenically unsaturated monomers (A) of a monomer mixture (A1) and a monomer mixture (A2) comprise:

- from 1.0 to 10.0 % by weight of one or more alpha, beta-ethylenically unsaturated monomer(s) (i) having a crosslinkable group;
- from 0.5 to 5.0 % by weight of one or more alpha, beta-ethylenically unsaturated monomer(s) (ii) having a silane group;
- from 0.5 to 3.0 % by weight of one or more polyfunctional alpha, beta-ethylenically unsaturated monomer(s) (iii); and
- from 0.5 to 5.0 % by weight of one or more copolymerizable surfactant(s) (iv);
- from 0.1 to 10.0 % by weight of one or more acid functional alpha, beta-ethylenically unsaturated monomer(s) (v);
- from 0.1 to 5 % by weight of one or more adhesion promoting alpha, beta-ethylenically unsaturated nitrogen containing monomer(s) (vi);

on the total of alpha, beta-ethylenically unsaturated monomers,
the remainder, up to 100% by weight, being non-ionic alpha, beta-ethylenically unsaturated monomers being different from monomers (i) to (iv) and (vi).

**5.** The polymer dispersion according to any of claims 1 to 4, wherein the alpha, beta-ethylenically unsaturated monomers are obtained from renewable feedstock.

**6.** The polymer dispersion according to any of claims 1 to 5, wherein the non-ionic alpha, beta-ethylenically unsaturated monomers are obtained from renewable feedstock and have a bio-based carbon content of more than 20% by weight of total carbon content of the monomer, the bio-carbon content being determined using the ASTM D6866-20 standard, or wherein the non-ionic alpha, beta-ethylenically unsaturated monomers are recycled monomers.

**7.** The polymer dispersion according to any of claims 1 to 6, wherein:

- the monomer composition of monomer mixture (A1) is different from the monomer composition of monomer mixture (A2); and
- the difference in glass transition temperature between the copolymer of the emulsion polymerized monomers of mixture (A1) and the copolymer of the emulsion polymerized monomers of mixture (A2) is at least 20 °C;
- the glass transition temperature of one of the copolymers, obtained from emulsion polymerized monomers of monomer mixture (A1) or from emulsion polymerized monomers mixture (A2) is at least 25 °C, the glass transition temperature of the other copolymer, being lower.

**8.** The polymer dispersion according to any of claims 1 to 7, wherein the crosslinkable group of the one or more alpha, beta-ethylenically unsaturated monomer(s) (i) is a pendant group comprising moieties selected from the group consisting of $-CO-R'$, $-CO-CH_2-CO-CH_3$, and $-CH_2OH$, wherein R' is H or C(1-4) alkyl.

**9.** The polymer dispersion according to any of claims 1 to 8, wherein the silane group of the one or more alpha, beta-ethylenically unsaturated monomer(s) (ii) is of the formula $-(CH_2)_n-Si(OR)_3$, wherein R is an alkyl group with up to 4 carbons and n is an integer from 0 to 3.

**10.** The polymer dispersion according to any of claims 1 to 9, wherein the one or more polyfunctional alpha, beta-ethylenically unsaturated monomer(s) (iii) comprise(s) monomers having two or more (meth)acrylic groups and/or allyl groups and/or vinyl groups.

**11.** The polymer dispersion according to any of claims 1 to 10, wherein the one or more copolymerizable surfactant(s) (iv) is (are) an anionic copolymerizable surfactant of the structure:

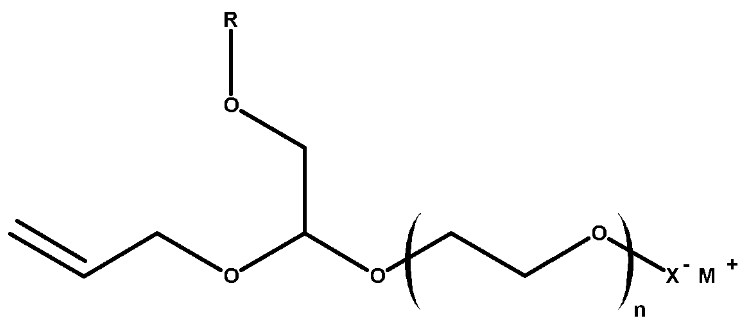

wherein
R is a C6 to C22 alkyl group, n is from 1 to 30, and $X^-$ is $SO3^-$, with $M^+$ being $Na^+$, $K^+$, $Li^+$, $NH_4^+$, a protonated amine, or a quaternary amine.

**12.** The polymer dispersion according to any of claims 3 to 11, wherein the one or more acid functional alpha, beta-ethylenically unsaturated monomer(s) (v) are selected from the group consisting of mono carboxyl-functional (meth) acrylic monomers, olefinically unsaturated dicarboxyl-functional monomers, sulfuric acid-bearing monomers, sulfonic acid-bearing monomers, sulfinic acid-bearing monomers phosphoric acid-bearing monomers, phosphonic acid-bearing monomers, phosphinic acid-bearing monomers and mixtures thereof; the acid groups being totally or partially converted into alkali metal and/or ammonium salts.

**13.** The polymer dispersion according to any of claims 3 to 12, wherein the one or more adhesion promoting alpha, beta-ethylenically unsaturated nitrogen containing monomer(s) (vi) comprise(s) amino, ureido or N-heterocyclic groups.

**14.** The polymer dispersion according to any of claims 1 to 13 comprising one or more crosslinker(s) (B), wherein the weight ratio of the polymerized alpha, beta-ethylenically unsaturated monomers (A) over the one or more crosslinker(s) (B) is comprised between 10 and 500.

**15.** The polymer dispersion according to any of claims 1 to 14, wherein the one or more crosslinker(s) (B) has (have) at least two reactive moieties selected from the group consisting of carboxylic acid, amino, thiol, methylol, etherified methylol, isocyanate, aldehyde, and hydrazide.

**16.** The polymer dispersion according to any of claims 1 or 15, wherein the one or more crosslinker(s) (B) is (are) adipic acid dihydrazide.

**17.** The polymer dispersion according to any of claims 1 to 16 comprising between 25 and 65 % by weight of a mixture comprising polymerized alpha, beta-ethylenically unsaturated monomers (A) and one or more crosslinker(s) (B), said mixture being **characterized by**:

- a Z-average particle size, according to ISO 13321, comprised between 40 and 200 nm;
- a Minimal Film Formation Temperature, determined as indicated in the experimental section, comprised between 5 and 60°C.

**18.** Method for the preparation of the polymer dispersion of any of claims 1 to 17 comprising the steps of:

- preparing monomer mixture or monomer pre-emulsion (A1) in feed vessel (FA1) and monomer mixture or monomer pre-emulsion (A2) in feed vessel (FA2), and
- feeding monomer mixture (A1) into a polymerization reactor and copolymerizing monomer mixture (A1), followed by feeding monomer mixture (A2) from feeding vessel (FA2) in the polymerization reactor and copolymerization of monomer mixture (A2) in the presence of copolymer (A1), or
- feeding monomer mixture (A2) into a polymerization reactor and copolymerizing monomer mixture (A2), followed by feeding monomer mixture (A1) from feeding vessel (FA1) in the polymerization reactor and copolymerization of monomer mixture (A1) in the presence of copolymer (A2).

**19.** Method for the preparation of the polymer dispersion of any of claims 1 to 17 comprising the steps of:

- preparing monomer mixture or monomer pre-emulsion (A1) in feed vessel (FA1) and monomer mixture or monomer pre-emulsion (A2) in feed vessel (FA2), and
- feeding monomer mixture (A1), from a feed vessel (FA1), into a polymerization reactor while feeding, simultaneously or after a delay, monomer mixture (A2) from feed vessel (FA2) into the feed vessel (FA1) while copolymerizing the monomers in the polymerization reactor, or
- feeding monomer mixture (A2), from a feed vessel (FA2), into a polymerization reactor while feeding, simultaneously or after a delay, monomer mixture (A1) from feed vessel (FA1) into the feed vessel (FA2) while copolymerizing the monomers in the polymerization reactor.

**20.** The method according to claim 19 comprising the steps of:

a) preparing monomer mixture or monomer pre-emulsion (A1) in feed vessel (FA1) and monomer mixture or

monomer pre-emulsion (A2) in feed vessel (FA2);

b) feeding between 5 and 10% of monomer mixture or monomer pre-emulsion (A1) from feed vessel (FA1) and radical initiator in a polymerization reactor comprising copolymerizable surfactant in demineralized water, while maintaining the temperature within the range of from 50 to 100 °C;

c) feeding the remainder 90 to 95% of monomer mixture or monomer pre-emulsion (A1) from feed vessel (FA1) and initiator to the polymerization reactor at a constant flow rate (RA1) within a period comprised between 3 and 6 hours, while feeding, into feed vessel feed-vessel (FA1), simultaneously or after a delay, monomer mixture or monomer pre-emulsion (A2) from feed vessel (FA2), at a constant flow rate (RA2), (RA2) preferably being identical to flow rate (RA1), within a period comprised between 3 and 6 hours, while continuously mixing and polymerizing the monomers of monomer mixture (A1) and (A2) in the polymerization reactor at a temperature within the range of from 50 to 100°C;

d) finalizing the polymerization at a temperature within the range of from 40 to 90 °C, preferably in the presence of a redox initiator system for a period of at least 30 minutes;

e) adjusting the pH to a value comprised between 7.5 and 9 trough addition of neutralizing agent;

f) adding the one or more crosslinker(s) (B).

**21.** The polymer dispersion according to any of claims 1 to 17, prepared according to the method of claim 19 or 20, the polymer dispersion comprising dispersed particles with gradual composition wherein:

- the difference between the glass transition temperature of the polymerized alpha, beta-ethylenically unsaturated monomers at the beginning of the monomer feed into the polymerization reactor and the glass transition temperature of the polymerized alpha, beta-ethylenically unsaturated monomers at the end of the monomer feed into the polymerization reactor is at least 20 °C;
- the dispersed particles comprise polymerized alpha, beta-ethylenically unsaturated monomers having a glass transition temperature of at least 25°C;
- the transition of the glass transition temperatures from the copolymers being continuously gradual, the glass transition temperature being calculated using the Fox equation.

**22.** Coating composition comprising the polymer dispersion of any of claims 1 to 17 or 21 and one or more additives selected from the group consisting of leveling agents, rheology agents, anti-blocking agents, flow control agents, flatting agents, pigment wetting and dispersing agents, surfactants, ultraviolet (UV) absorbers, UV light stabilizer, corrosion inhibitors, thickening agents, plasticizers, fillers, and pigments.

**23.** A substrate selected from the group consisting of solid wood, engineered wood, metal, polymers, glass, composites, concrete, and ceramics, preferably a wooden substrate, coated with the composition according to claim 22.

**24.** Method for producing a coated substrate comprising the steps of:

- applying the coating composition of claim 22 on a substrate, at a coating thickness adjusted to obtain a dry coating thickness that is equal or less than 100 μm, by means of a coating technique selected from the group consisting of brushing, spray coating, draw-down, roll coating, coil coating, curtain coating, immersion coating, dip coating, flow coating, ink-jetting, and vacuum coating; and
- curing the coating at a temperature comprised between 20 and 180°C for a period comprised between 30 seconds and 30 minutes.

**25.** Use of the coating composition according to claim 22, for coating a substrate selected from the group consisting of solid wood, engineered wood, metal, polymers, glass, composites, concrete, and ceramics.

## Patentansprüche

**1.** Wässerige, kein Fluor enthaltende Vinylpolymerdispersion, umfassend:

- das Reaktionsprodukt von radikalemulsionspolymerisierten alpha,beta-ethylenisch ungesättigten Monomeren (A) eines Monomergemisches (A1) und eines Monomergemisches (A2) und
- einen oder mehrere Vernetzer (B),

wobei die alpha,beta-ethylenisch ungesättigten Monomere (A):

- ein oder mehrere alpha,beta-ethylenisch ungesättigte Monomere (i) mit einer vernetzbaren Gruppe;
- ein oder mehrere alpha,beta-ethylenisch ungesättigte Monomere (ii) mit einer Silangruppe;
- ein oder mehrere polyfunktionelle alpha,beta-ethylenisch ungesättigte Monomere (iii);
- ein oder mehrere copolymerisierbare oberflächenaktive Mittel (iv) und
- weitere nicht-ionische alpha,beta-ethylenisch ungesättigte Monomere, die verschieden von den Monomeren (i) bis (iv) sind,

umfassen.

**2.** Polymerdispersion nach Anspruch 1, wobei die alpha,beta-ethylenisch ungesättigten Monomere (A) eines Monomergemisches (A1) und eines Monomergemisches (A2):

- 1,0 bis 10,0 Gew.-% von einem oder mehreren alpha,beta-ethylenisch ungesättigten Monomeren (i) mit einer vernetzbaren Gruppe;
- 0,5 bis 5,0 Gew.-% von einem oder mehreren alpha,beta-ethylenisch ungesättigten Monomeren (ii) mit einer Silangruppe;
- 0,5 bis 3,0 Gew.-% von einem oder mehreren polyfunktionellen alpha,beta-ethylenisch ungesättigten Monomeren (iii) und
- 0,5 bis 5,0 Gew.-% von einem oder mehreren copolymerisierbaren oberflächenaktiven Mitteln (iv);

bezogen auf alle alpha,beta-ethylenisch ungesättigten Monomere, umfassen,
wobei der Rest, bis zu 100 Gew.-%, nicht-ionische alpha,beta-ethylenisch ungesättigte Monomere sind, die verschieden sind von den Monomeren (i) bis (iv).

**3.** Polymerdispersion nach Anspruch 1 oder 2, wobei die alpha,beta-ethylenisch ungesättigten Monomere (A) eines Monomergemisches (A1) und eines Monomergemisches (A2) zusätzlich:

- ein oder mehrere säurefunktionelle alpha,beta-ethylenisch ungesättigte Monomere (v);
- ein oder mehrere haftvermittelnde alpha,beta-ethylenisch ungesättigte Stickstoff enthaltende Monomere (vi)

umfassen.

**4.** Polymerdispersion nach Anspruch 3, wobei die alpha,beta-ethylenisch ungesättigten Monomere (A) eines Monomergemisches (A1) und eines Monomergemisches (A2):

- 1,0 bis 10,0 Gew.-% von einem oder mehreren alpha,beta-ethylenisch ungesättigten Monomeren (i) mit einer vernetzbaren Gruppe;
- 0,5 bis 5,0 Gew.-% von einem oder mehreren alpha,beta-ethylenisch ungesättigten Monomeren (ii) mit einer Silangruppe;
- 0,5 bis 3,0 Gew.-% von einem oder mehreren polyfunktionellen alpha,beta-ethylenisch ungesättigten Monomeren (iii) und
- 0,5 bis 5,0 Gew.-% von einem oder mehreren copolymerisierbaren oberflächenaktiven Mitteln (iv);
- 0,1 bis 10,0 Gew.-% von einem oder mehreren säurefunktionellen alpha,beta-ethylenisch ungesättigten Monomeren (v);
- 0,1 bis 5 Gew.-% von einem oder mehreren haftvermittelnden alpha,beta-ethylenisch ungesättigten Stickstoff enthaltenden Monomeren (vi);

bezogen auf alle alpha,beta-ethylenisch ungesättigten Monomere, umfassen,
wobei der Rest, bis zu 100 Gew.-%, nicht-ionische alpha,beta-ethylenisch ungesättigte Monomere sind, die verschieden sind von den Monomeren (i) bis (iv) und (vi).

**5.** Polymerdispersion nach einem der Ansprüche 1 bis 4, wobei die alpha,beta-ethylenisch ungesättigten Monomere aus erneuerbarem Ausgangsmaterial erhalten werden.

**6.** Polymerdispersion nach einem der Ansprüche 1 bis 5, wobei die nicht-ionischen alpha,beta-ethylenisch ungesättigten Monomere aus erneuerbarem Ausgangsmaterial erhalten werden und einen biobasierten Kohlenstoffgehalt von mehr als 20 Gew.-% des gesamten Kohlenstoffgehalts des Monomers aufweisen, wobei der Bio-Kohlenstoffgehalt unter Anwendung des Standards ASTM D6866-20 bestimmt wird oder wobei die nicht-ionischen alpha,beta-ethylenisch ungesättigten Monomere recycelte Monomere sind.

**7.** Polymerdispersion nach einem der Ansprüche 1 bis 6, wobei:

- die Monomerzusammensetzung von Monomergemisch (A1) verschieden ist von der Monomerzusammensetzung von Monomergemisch (A2) und
- die Differenz zwischen der Glasübergangstemperatur des Copolymers der emulsionspolymerisierten Monomere von Gemisch (A1) und des Copolymers der emulsionspolymerisierten Monomere von Gemisch (A2) mindestens 20 °C beträgt;
- die Glasübergangstemperatur eines der Copolymere, erhalten aus emulsionspolymerisierten Monomeren von Monomergemisch (A1) oder emulsionspolymerisierten Monomeren von Monomergemisch (A2) mindestens 25 °C beträgt, wobei die Glasübergangstemperatur des anderen Copolymers niedriger ist.

**8.** Polymerdispersion nach einem der Ansprüche 1 bis 7, wobei die vernetzbare Gruppe der ein oder mehreren alpha,beta-ethylenisch ungesättigten Monomere (i) eine Seitengruppe ist, die Einheiten umfasst, die aus der Gruppe, bestehend aus -CO-R', $-CO-CH_2-CO-CH_3$ und $-CH_2OH$, wobei R' H oder C(1-4)-Alkyl ist, ausgewählt sind.

**9.** Polymerdispersion nach einem der Ansprüche 1 bis 8, wobei die Silangruppe der ein oder mehreren alpha,beta-ethylenisch ungesättigten Monomere (ii) die Formel $-(CH_2)_n-Si(OR)_3$ aufweist, wobei R eine Alkylgruppe mit bis zu 4 Kohlenstoffen ist und n eine ganze Zahl von 0 bis 3 ist.

**10.** Polymerdispersion nach einem der Ansprüche 1 bis 9, wobei die ein oder mehreren polyfunktionellen alpha,beta-ethylenisch ungesättigten Monomere (iii) Monomere mit zwei oder mehr (Meth)acrylgruppen und/oder Allylgruppen und/oder Vinylgruppen umfassen.

**11.** Polymerdispersion nach einem der Ansprüche 1 bis 10, wobei die ein oder mehreren copolymerisierbaren oberflächenaktiven Mittel (iv) ein anionisches copolymerisierbares oberflächenaktives Mittel mit der Struktur:

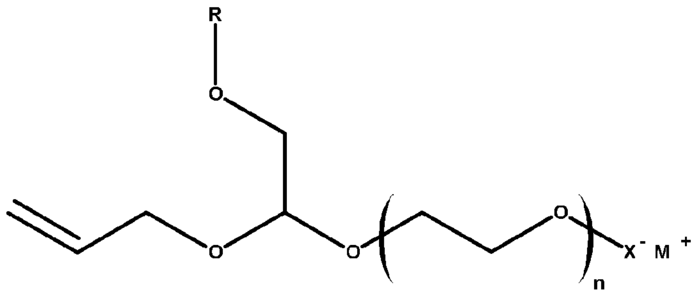

sind, wobei
R eine C6- bis C22-Alkylgruppe ist, n 1 bis 30 ist und $X^-$ $SO^{3-}$ ist, wobei $M^+$ $Na^+$, $K^+$, $Li^+$, $NH_4^+$, ein protoniertes Amin oder ein quartäres Amin ist.

**12.** Polymerdispersion nach einem der Ansprüche 3 bis 11, wobei die ein oder mehreren säurefunktionellen alpha,beta-ethylenisch ungesättigten Monomere (v) aus der Gruppe ausgewählt sind, die aus Monocarboxyl-funktionellen (Meth)acrylmonomeren, olefinisch ungesättigten Dicarboxyl-funktionellen Monomeren, Schwefelsäuretragenden Monomeren, Sulfonsäure-tragenden Monomeren, Sulfinsäure-tragenden Monomeren, Phosphorsäure-tragenden Monomeren, Phosphonsäure-tragenden Monomeren, Phosphinsäure-tragenden Monomeren und Gemischen davon besteht; wobei die Säuregruppen vollständig oder teilweise in Alkalimetall- und/oder Ammoniumsalze umgewandelt sind.

**13.** Polymerdispersion nach einem der Ansprüche 3 bis 12, wobei die ein oder mehreren haftvermittelnden alpha,beta-ethylenisch ungesättigten Stickstoff enthaltenden Monomere (vi) Amino-, Ureido- oder N-heterocyclische Gruppen umfassen.

**14.** Polymerdispersion nach einem der Ansprüche 1 bis 13, umfassend ein oder mehrere Vernetzer (B), wobei das Gewichtsverhältnis der polymerisierten alpha,beta-ethylenisch ungesättigten Monomere (A) gegenüber den ein oder mehreren Vernetzern (B) zwischen 10 und 500 liegt.

**15.** Polymerdispersion nach einem der Ansprüche 1 bis 14, wobei der eine oder die mehreren Vernetzer (B) mindestens

zwei reaktive Einheiten umfassen, die aus der Gruppe ausgewählt sind, die aus Carbonsäure, Amino, Thiol, Methylol, verethertem Methylol, Isocyanat, Aldehyd und Hydrazid besteht.

**16.** Polymerdispersion nach einem der Ansprüche 1 oder 15, wobei der eine oder die mehreren Vernetzer (B) Adipinsäuredihydrazid sind.

**17.** Polymerdispersion nach einem der Ansprüche 1 bis 16, umfassend zwischen 25 und 65 Gew.-% eines Gemisches, das polymerisierte alpha,beta-ethylenisch ungesättigte Monomere (A) und einen oder mehrere Vernetzer (B) umfasst, wobei das Gemisch durch:

- eine Z-mittlere Teilchengröße, gemäß ISO 13321, zwischen 40 und 200 nm;
- eine minimale Filmbildungstemperatur, bestimmt wie im experimentellen Abschnitt angegeben, zwischen 5 und 60 °C

gekennzeichnet ist.

**18.** Verfahren zur Herstellung der Polymerdispersion nach einem der Ansprüche 1 bis 17, umfassend die Schritte:

- Herstellen eines Monomergemisches oder einer Monomervoremulsion (A1) in Einspeisegefäß (FA1) und eines Monomergemisches oder einer Monomervoremulsion (A2) in Einspeisegefäß (FA2) und
- Einspeisen von Monomergemisch (A1) in einen Polymerisationsreaktor und Copolymerisieren von Monomergemisch (A1), gefolgt von Einspeisen von Monomergemisch (A2) aus Einspeisegefäß (FA2) in den Polymerisationsreaktor und Copolymerisation von Monomergemisch (A2) in der Gegenwart von Copolymer (A1), oder
- Einspeisen von Monomergemisch (A2) in einen Polymerisationsreaktor und Copolymerisieren von Monomergemisch (A2), gefolgt von Einspeisen von Monomergemisch (A1) aus Einspeisegefäß (FA1) in den Polymerisationsreaktor und Copolymerisation von Monomergemisch (A1) in der Gegenwart von Copolymer (A2).

**19.** Verfahren zur Herstellung der Polymerdispersion nach einem der Ansprüche 1 bis 17, umfassend die Schritte:

- Herstellen eines Monomergemisches oder einer Monomervoremulsion (A1) in Einspeisegefäß (FA1) und eines Monomergemisches oder einer Monomervoremulsion (A2) in Einspeisegefäß (FA2) und
- Einspeisen von Monomergemisch (A1) aus einem Einspeisegefäß (FA1) in einen Polymerisationsreaktor, während gleichzeitig oder später Monomergemisch (A2) aus Einspeisegefäß (FA2) in das Einspeisegefäß (FA1) eingespeist wird, während die Monomere in dem Polymerisationsreaktor copolymerisiert werden, oder
- Einspeisen von Monomergemisch (A2) aus einem Einspeisegefäß (FA2) in einen Polymerisationsreaktor, während gleichzeitig oder später Monomergemisch (A1) aus Einspeisegefäß (FA1) in das Einspeisegefäß (FA2) eingespeist wird, während die Monomere in dem Polymerisationsreaktor copolymerisiert werden.

**20.** Verfahren nach Anspruch 19, umfassend die Schritte:

a) Herstellen eines Monomergemisches oder einer Monomervoremulsion (A1) in Einspeisegefäß (FA1) und eines Monomergemisches oder einer Monomervoremulsion (A2) in Einspeisegefäß (FA2);
b) Einspeisen zwischen 5 und 10 % des Monomergemisches oder der Monomervoremulsion (A1) aus Einspeisegefäß (FA1) und eines Radikalinitiators in einen Polymerisationsreaktor, der ein copolymerisierbares oberflächenaktives Mittel in demineralisiertem Wasser umfasst, während die Temperatur innerhalb des Bereiches von 50 bis 100 °C gehalten wird;
c) Einspeisen der restlichen 90 bis 95 % des Monomergemisches oder der Monomervoremulsion (A1) aus Einspeisegefäß (FA1) und eines Initiators in den Polymerisationsreaktor mit einer konstanten Fließgeschwindigkeit (RA1) innerhalb eines Zeitraumes zwischen 3 und 6 Stunden, während in Einspeisegefäß (FA1) gleichzeitig oder später Monomergemisch oder Monomervoremulsion (A2) aus Einspeisegefäß (FA2) mit einer konstanten Fließgeschwindigkeit (RA2), wobei (RA2) vorzugsweise identisch ist mit Fließgeschwindigkeit (RA1), innerhalb eines Zeitraumes zwischen 3 und 6 Stunden eingespeist wird, während die Monomere von Monomergemisch (A1) und (A2) in dem Polymerisationsreaktor bei einer Temperatur innerhalb des Bereiches von 50 bis 100 °C kontinuierlich gemischt und polymerisiert werden;
d) Abschließen der Polymerisation bei einer Temperatur innerhalb des Bereiches von 40 bis 90 °C, vorzugsweise in der Gegenwart eines Redoxinitiatorsystems für einen Zeitraum von mindestens 30 Minuten;
e) Einstellen des pHs auf einen Wert zwischen 7,5 und 9 durch Zugabe eines Neutralisierungsmittels;
f) Zugeben des einen oder der mehreren Vernetzer (B).

**21.** Polymerdispersion nach einem der Ansprüche 1 bis 17, hergestellt gemäß dem Verfahren nach Anspruch 19 oder 20, wobei die Polymerdispersion dispergierte Teilchen mit stufenweiser Zusammensetzung umfasst, wobei:

- die Differenz zwischen der Glasübergangstemperatur der polymerisierten alpha,beta-ethylenisch ungesättigten Monomere zu Beginn der Monomereinspeisung in den Polymerisationsreaktor und der Glasübergangstemperatur der polymerisierten alpha,beta-ethylenisch ungesättigten Monomere am Ende der Monomereinspeisung in den Polymerisationsreaktor mindestens 20 °C beträgt;
- die dispergierten Teilchen polymerisierte alpha,beta-ethylenisch ungesättigte Monomere mit einer Glasübergangstemperatur von mindestens 25 °C umfassen;
- der Übergang der Glasübergangstemperaturen aus den Copolymeren kontinuierlich stufenweise ist, wobei die Glasübergangstemperatur unter Anwendung der Fox-Gleichung berechnet wird.

**22.** Beschichtungszusammensetzung, umfassend die Polymerdispersion nach einem der Ansprüche 1 bis 17 oder 21 und ein oder mehrere Additive, ausgewählt aus der Gruppe, bestehend aus Egalisierungshilfsmitteln, Rheologiemitteln, Antiblockiermitteln, Verlaufmitteln, Mattierungsmitteln, Pigmentbenetzungs- und -dispergiermitteln, oberflächenaktiven Mitteln, Ultraviolett-(UV)-Absorbern, UV-Lichtstabilisatoren, Korrosionshemmern, Verdickungsmitteln, Weichmachern, Füllstoffen und Pigmenten.

**23.** Substrat, ausgewählt aus der Gruppe, bestehend aus Massivholz, technischem Holz, Metall, Polymeren, Glas, Verbundstoffen, Beton und Keramik, vorzugsweise Holzsubstrat, das mit der Zusammensetzung nach Anspruch 22 beschichtet ist.

**24.** Verfahren zur Herstellung eines beschichteten Substrats, umfassend die Schritte:

- Auftragen der Beschichtungszusammensetzung nach Anspruch 22 auf ein Substrat mit einer Beschichtungsdicke, die so eingestellt ist, dass eine Trockenbeschichtungsdicke erhalten wird, die gleich 100 $\mu$m ist oder weniger beträgt, mittels einer Beschichtungstechnik, ausgewählt aus der Gruppe, bestehend aus Bürsten, Spritzen, Abziehen, Walzenlackieren, Bandlackieren, Gießlackieren, Tauchbeschichten, Tauchlackieren, Fluten, Tintenspritzen und Vakuumbeschichten; und
- Härten der Beschichtung bei einer Temperatur zwischen 20 und 180 °C für einen Zeitraum zwischen 30 Sekunden und 30 Minuten.

**25.** Verwendung der Beschichtungszusammensetzung nach Anspruch 22 zum Beschichten eines Substrats, ausgewählt aus der Gruppe, bestehend aus Massivholz, technischem Holz, Metall, Polymeren, Glas, Verbundstoffen, Beton und Keramik.

## Revendications

**1.** Dispersion aqueuse de polymère vinylique ne contenant pas de fluor, comprenant :

- le produit de réaction de monomères alpha, bêta-éthyléniquement insaturés polymérisés en émulsion par radicaux libres (A) d'un mélange de monomères (A1) et d'un mélange de monomères (A2), et
- un ou plusieurs agents de réticulation (B),

lesdits monomères alpha, bêta-éthyléniquement insaturés (A) comprenant :

- un ou plusieurs monomères alpha, bêta-éthyléniquement insaturés (i) ayant un groupe réticulable ;
- un ou plusieurs monomères alpha, bêta-éthyléniquement insaturés (ii) ayant un groupe silane ;
- un ou plusieurs monomères polyfonctionnels alpha, bêta-éthyléniquement insaturés (iii) ;
- un ou plusieurs tensioactifs copolymérisables (iv) ; et
- d'autres monomères non ioniques alpha, bêta-éthyléniquement insaturés qui sont différents des monomères (i) à (iv).

**2.** Dispersion de polymère selon la revendication 1, dans laquelle les monomères alpha, bêta-éthyléniquement insaturés (A) d'un mélange de monomères (a1) et d'un mélange de monomères (a2) comprennent :

- de 1,0 à 10,0 % en poids d'un ou plusieurs monomères alpha, bêta-éthyléniquement insaturés (i) ayant un

groupe réticulable ;
- de 0,5 à 5,0 % en poids d'un ou plusieurs monomères alpha, bêta-éthyléniquement insaturés (ii) ayant un groupe silane ;
- de 0,5 à 3,0 % en poids d'un ou de plusieurs monomères polyfonctionnels alpha, bêta-éthyléniquement insaturés (iii), et
- de 0,5 à 5,0 % en poids d'un ou plusieurs tensioactifs copolymérisables (iv) ;
sur le total des monomères alpha, bêta-éthyléniquement insaturés,
le reste, jusqu'à 100 % en poids, étant des monomères non ioniques alpha, bêta-éthyléniquement insaturés qui sont différents des monomères (i) à (iv).

**3.** Dispersion de polymère selon la revendication 1 ou 2, dans laquelle les monomères alpha, bêta-éthyléniquement insaturés (A) d'un mélange de monomères (A1) et d'un mélange de monomères (A2) comprennent en outre :

- un ou plusieurs monomères alpha, bêta-éthyléniquement insaturés à fonction acide (v) ;
- un ou plusieurs monomères contenant de l'azote alpha, bêta-éthyléniquement insaturés favorisant l'adhérence (vi).

**4.** Dispersion de polymère selon la revendication 3, dans laquelle les monomères alpha, bêta-éthyléniquement insaturés (A) d'un mélange de monomères (a1) et d'un mélange de monomères (a2) comprennent :

- de 1,0 à 10,0 % en poids d'un ou plusieurs monomères alpha, bêta-éthyléniquement insaturés (i) ayant un groupe réticulable ;
- de 0,5 à 5,0 % en poids d'un ou plusieurs monomères alpha, bêta-éthyléniquement insaturés (ii) ayant un groupe silane ;
- de 0,5 à 3,0 % en poids d'un ou de plusieurs monomères polyfonctionnels alpha, bêta-éthyléniquement insaturés (iii), et
- de 0,5 à 5,0 % en poids d'un ou plusieurs tensioactifs copolymérisables (iv) ;
- de 0,1 à 10,0 % en poids d'un ou de plusieurs monomères alpha, bêta-éthyléniquement insaturés à fonction acide (v) ;
- de 0,1 à 5 % en poids d'un ou de plusieurs monomères contenant de l'azote alpha, bêta-éthyléniquement insaturés favorisant l'adhérence (vi) ;
sur le total des monomères alpha, bêta-éthyléniquement insaturés,
le reste, jusqu'à 100 % en poids, étant des monomères non ioniques alpha, bêta-éthyléniquement insaturés qui sont différents des monomères (i) à (iv) et (vi).

**5.** Dispersion de polymère selon l'une quelconque des revendications 1 à 4, dans laquelle les monomères alpha, bêta-éthyléniquement insaturés sont obtenus à partir d'une matière première renouvelable.

**6.** Dispersion de polymère selon l'une quelconque des revendications 1 à 5, dans laquelle les monomères non ioniques alpha, bêta-éthyléniquement insaturés sont obtenus à partir d'une matière première renouvelable et ont une teneur en carbone d'origine biologique de plus de 20 % en poids de la teneur totale en carbone du monomère, la teneur en carbone biologique étant déterminée en utilisant la norme ASTM D6866-20, ou dans laquelle les monomères non ioniques alpha, bêta-éthyléniquement insaturés sont des monomères recyclés.

**7.** Dispersion de polymère selon l'une quelconque des revendications 1 à 6, dans laquelle :

- la composition de monomères du mélange de monomères (A1) est différente de la composition de monomères du mélange de monomères (A2) ; et
- la différence de température de transition vitreuse entre le copolymère des monomères polymérisés en émulsion du mélange (A1) et le copolymère des monomères polymérisés en émulsion du mélange (A2) est d'au moins 20 °C ;
- la température de transition vitreuse de l'un des copolymères, obtenu à partir de monomères polymérisés en émulsion du mélange de monomères (A1) ou du mélange de monomères polymérisés en émulsion (A2) est d'au moins 25 °C, la température de transition vitreuse de l'autre copolymère, étant plus basse.

**8.** Dispersion de polymère selon l'une quelconque des revendications 1 à 7, dans laquelle le groupe réticulable du ou des monomères alpha, bêta-éthyléniquement insaturés (i) est un groupe pendant comprenant des groupements choisis dans le groupe constitué par -CO-R', $-CO-CH_2-CO-CH_3$ et $-CH_2OH$, dans lesquels R' est H ou C(1-4)alkyle.

9. Dispersion de polymère selon l'une quelconque des revendications 1 à 8, dans laquelle le groupe silane du ou des monomères alpha, bêta-éthyléniquement insaturés (ii) est de formule $-(CH_2)_n-Si(OR)_3$, dans laquelle R est un groupe alkyle ayant jusqu'à 4 atomes de carbone et n est un entier de 0 à 3.

10. Dispersion de polymère selon l'une quelconque des revendications 1 à 9, dans laquelle le ou les monomères polyfonctionnels alpha, bêta-éthyléniquement insaturés (iii) comprennent des monomères ayant deux ou plusieurs groupes (méth)acryliques et/ou groupes allyle et/ou groupes vinyle.

11. Dispersion de polymère selon l'une quelconque des revendications 1 à 10, dans laquelle le ou les tensioactifs copolymérisables (iv) sont un tensioactif copolymérisable anionique de la structure :

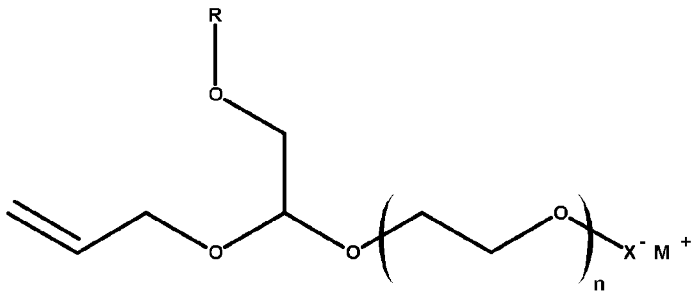

dans laquelle
R est un groupe alkyle en C6 à C22, n est de 1 à 30, et $X^-$ est $SO3^-$, $M^+$ étant $Na^+$, $K^+$, $Li^+$, $NH_4^+$, une amine protonée ou une amine quaternaire.

12. Dispersion de polymère selon l'une quelconque des revendications 3 à 11, dans laquelle le ou les monomères alpha, bêta-éthyléniquement insaturés à fonction acide (v) sont choisis dans le groupe constitué par les monomères (méth) acryliques à fonction monocarboxyle, les monomères à fonction dicarboxyle oléfiniquement insaturés, les monomères contenant acide sulfurique, les monomères contenant acide sulfonique, les monomères contenant acide sulfinique, les monomères contenant acide phosphorique, les monomères contenant acide phosphonique, les monomères contenant acide phosphinique et leurs mélanges ; les groupes de type acide étant totalement ou partiellement convertis en sels de métaux alcalins et/ou d'ammonium.

13. Dispersion de polymère selon l'une quelconque des revendications 3 à 12, dans laquelle le ou les monomères contenant de l'azote alpha, bêta-éthyléniquement insaturés favorisant l'adhérence (vi) comprennent des groupes amino, uréido ou N-hétérocycliques.

14. Dispersion de polymère selon l'une quelconque des revendications 1 à 13, comprenant un ou plusieurs agents de réticulation (B), dans laquelle le rapport pondéral des monomères polymérisés alpha, bêta-éthyléniquement insaturés (A) sur l'agent ou les agents de réticulation (B) est compris entre 10 et 500.

15. Dispersion de polymère selon l'une quelconque des revendications 1 à 14, dans laquelle l'agent ou les agents de réticulation (B) ont au moins deux groupements réactifs choisis dans le groupe constitué par acide carboxylique, amino, thiol, méthylol, méthylol éthérifié, isocyanate, aldéhyde et hydrazide.

16. Dispersion de polymère selon l'une quelconque des revendications 1 ou 15, dans laquelle l'agent ou les agents de réticulation (B) sont le dihydrazide d'acide adipique.

17. Dispersion de polymère selon l'une quelconque des revendications 1 à 16, comprenant entre 25 et 65 % en poids d'un mélange comprenant des monomères polymérisés alpha, bêta-éthyléniquement insaturés (A) et un ou plusieurs agents de réticulation (B), ledit mélange étant **caractérisé par** :

- une taille moyenne de particule Z, selon la norme ISO 13321, comprise entre 40 et 200 nm ;
- une température minimale de formation de film, déterminée comme indiqué dans la partie expérimentale, comprise entre 5 et 60 °C.

18. Procédé de préparation de la dispersion de polymère selon l'une quelconque des revendications 1 à 17, comprenant

les étapes de :

- préparation d'un mélange de monomères ou une pré-émulsion de monomères (A1) dans un récipient d'alimentation (FA1) et un mélange de monomères ou une pré-émulsion de monomères (A2) dans un récipient d'alimentation (FA2), et
- alimentation du mélange de monomères (A1) dans un réacteur de polymérisation et copolymérisation du mélange de monomères (A1), puis alimentation du mélange de monomères (A2) d'un récipient d'alimentation (FA2) dans le réacteur de polymérisation et copolymérisation du mélange de monomères (A2) en présence du copolymère (A1), ou
- alimentation du mélange de monomères (A2) dans un réacteur de polymérisation et copolymérisation du mélange de monomères (A2), puis alimentation du mélange de monomères (A1) du récipient d'alimentation (FA1) dans le réacteur de polymérisation et copolymérisation du mélange de monomères (A1) en présence du copolymère (A2).

**19.** Procédé de préparation de la dispersion de polymère selon l'une quelconque des revendications 1 à 17, comprenant les étapes de :

- préparation d'un mélange de monomères ou une pré-émulsion de monomères (A1) dans un récipient d'alimentation (FA1) et un mélange de monomères ou une pré-émulsion de monomères (A2) dans un récipient d'alimentation (FA2), et
- alimentation du mélange de monomères (A1), d'un récipient d'alimentation (FA1), dans un réacteur de polymérisation tout en alimentant, simultanément ou après un certain délai, le mélange de monomères (A2) du récipient d'alimentation (FA2) dans le récipient d'alimentation (FA1) tout en copolymérisant les monomères dans le réacteur de polymérisation, ou
- alimentation du mélange de monomères (A2), d'un récipient d'alimentation (FA2), dans un réacteur de polymérisation tout en alimentant, simultanément ou après un certain délai, le mélange de monomères (A1) du récipient d'alimentation (FA1) dans le récipient d'alimentation (FA2) tout en copolymérisant les monomères dans le réacteur de polymérisation.

**20.** Procédé selon la revendication 19, comprenant les étapes de :

a) préparation d'un mélange de monomères ou d'une pré-émulsion de monomères (A1) dans un récipient d'alimentation (FA1) et d'un mélange de monomères ou d'une pré-émulsion de monomères (A2) dans un récipient d'alimentation (FA2) ;
b) alimentation d'entre 5 et 10 % du mélange de monomères ou de la pré-émulsion de monomères (A1) du récipient d'alimentation (FA1) et d'un initiateur de radicaux dans un réacteur de polymérisation comprenant un tensioactif copolymérisable dans de l'eau déminéralisée, tout en maintenant la température dans la plage de 50 à 100 °C ;
c) alimentation des 90 à 95 % restants du mélange de monomère ou de la pré-émulsion de monomères (A1) d'un récipient d'alimentation (FA1) et d'un initiateur au réacteur de polymérisation à un débit constant (RA1) dans un délai compris entre 3 et 6 heures, tout en alimentant dans le récipient d'alimentation (A1), simultanément ou après un délai le mélange de monomères ou la pré-émulsion de monomères (A2) du récipient d'alimentation (FA2), à un débit constant (RA2), (RA2) étant de préférence identique au débit (RA1), pendant une période comprise entre 3 et 6 heures, tout en mélangeant et polymérisant de manière continue les monomères du mélange de monomères (A1) et (A2) dans le réacteur de polymérisation à une température dans la plage de 50 à 100 °C ;
d) finalisation de la polymérisation à une température comprise entre 40 et 90 °C, de préférence en la présence d'un système d'initiateur redox pendant une période d'au moins 30 minutes ;
e) ajustement du pH jusqu'à une valeur comprise entre 7,5 et 9 par ajout d'agent neutralisant ;
f) ajout du ou des agents de réticulation (B).

**21.** Dispersion de polymère selon l'une quelconque des revendications 1 à 17, préparée selon le procédé de la revendication 19 ou 20, la dispersion de polymère comprenant des particules dispersées avec une composition graduelle dans laquelle :

- la différence entre la température de transition vitreuse des monomères alpha, bêta-éthyléniquement insaturés polymérisés au début de l'alimentation en monomères dans le réacteur de polymérisation et la température de transition vitreuse des monomères alpha, bêta-éthyléniquement insaturés polymérisés à la fin de l'alimentation en monomères dans le réacteur de polymérisation est d'au moins 20 °C ;

- les particules dispersées comprennent des monomères alpha, bêta-éthyléniquement insaturés polymérisés ayant une température de transition vitreuse d'au moins 25 °C ;
- la transition des températures de transition vitreuse des copolymères étant graduelle de manière continue, la température de transition vitreuse étant calculée à l'aide de l'équation de Fox.

**22.** Composition de revêtement comprenant la dispersion de polymère selon l'une quelconque des revendications 1 à 17 ou 21 et un ou plusieurs additifs choisis dans le groupe constitué par les agents de nivellement, les agents de rhéologie, les agents anti-blocage, les agents de régulation de l'écoulement, les agents d'aplatissement, les agents mouillants et dispersants de pigments, les tensioactifs, les absorbeurs ultraviolets (UV), les stabilisants à la lumière UV, les inhibiteurs de corrosion, les agents épaississants, les plastifiants, les charges et les pigments.

**23.** Substrat choisi dans le groupe constitué par le bois massif, le bois d'ingénierie, le métal, les polymères, le verre, les composites, le béton et les céramiques, de préférence substrat en bois, revêtu par la composition selon la revendication 22.

**24.** Procédé de fabrication d'un substrat revêtu comprenant les étapes de :

- application de la composition de revêtement selon la revendication 22 sur un substrat, à une épaisseur de revêtement ajustée pour obtenir une épaisseur de revêtement à sec qui est égale ou inférieure à 100 µm, au moyen d'une technique de revêtement choisie dans le groupe constitué par le brossage, le revêtement par pulvérisation, l'étirage, le revêtement au rouleau, le revêtement en spirale, le couchage au rideau, le revêtement par immersion, le revêtement par trempage, le revêtement par écoulement, le jet d'encre, et le revêtement sous vide ; et
- durcissement du revêtement à une température comprise entre 20 et 180 °C pendant une durée comprise entre 30 secondes et 30 minutes.

**25.** Utilisation de la composition de revêtement selon la revendication 22, pour le revêtement d'un substrat choisi dans le groupe constitué par le bois massif, le bois d'ingénierie, le métal, les polymères, le verre, les composites, le béton et les céramiques.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0758364 B2
- WO 2012140042 A1
- US 5139882 A
- EP 0927198 B1
- EP 1125949 B1
- US 5468800 A
- EP 0722477 B1
- DE 4439457 A1
- US 6605359 B2
- US 6107391 A
- CA 2203438 A1
- CN 107700216 A
- US 2014031486 A
- US 2017275407 A
- US 6617389 B1, Akzo Nobel N.V.


### Non-patent literature cited in the description


- **T. G. FOX**. *Bull. Am. Phys. Soc.*, 1956, vol. 1, 123
- Polymer Handbook. John Wiley & Sons, Inc., 1999
- **K.L. HOY**. *Journal of Coatings Technology*, 1979, vol. 51 (651)